# EUROPEAN PATENT SPECIFICATION

(11) **EP 4 274 282 B1**
(45) Date of publication and mention of the grant of the patent: **01.01.2025**
(21) Application number: 21921915.1
(22) Date of filing: 30.01.2021
(51) Int. Cl.: H04W 12/033, H04W 12/043, H04W 12/041, H04W 12/037, H04L 9/40, H04L 9/08

(54) **METHOD, APPARATUS AND SYSTEM FOR OBTAINING SECURITY PARAMETERS**
VERFAHREN, VORRICHTUNG UND SYSTEM ZUR GEWINNUNG VON SICHERHEITSPARAMETERN
PROCÉDÉ, APPAREIL ET SYSTÈME POUR OBTENIR DES PARAMÈTRES DE SÉCURITÉ

(43) Date of publication of application: 08.11.2023
(73) Proprietor: Huawei Technologies Co., Ltd., Shenzhen, Guangdong 518129 (CN)
(72) Inventor: ZHU, Haoren, Shenzhen, Guangdong 518129 (CN); ZHU, Hualin, Shenzhen, Guangdong 518129 (CN); HU, Li, Shenzhen, Guangdong 518129 (CN); WU, Yizhuang, Shenzhen, Guangdong 518129 (CN)
(74) Representative: MERH-IP Matias Erny Reichl Hoffmann Patentanwälte PartG mbB
(86) International application number: PCT/CN2021/074553
(87) International publication number: WO 2022/160314

(56) References cited:
- WO-A1-2019/088801
- WO-A1-2020/212643
- CN-A- 108 810 884
- CN-A- 109 586 900
- CN-A- 110 365 470
- CN-A- 111 641 947
- "3 rd Generation Partnership Project; Technical Specification Group Services and System Aspects; Security architecture and procedures for 5G system (Release 17)", no. 20201201, 14 December 2020 (2020-12-14), XP051966317, Retrieved from the Internet <URL:https://ftp.3gpp.org/tsg_sa/WG3_Security/TSGS3_101e/SA_90/33501-h00.doc> [retrieved on 20201214]
- ANONYMOUS: "3rd Generation Partnership Project; Technical Specification Group Services and System Aspects; Study on security for 5GS enhanced support of Vertical and LAN Services; (Release 16)", no. V1.2.0, 22 September 2019 (2019-09-22), pages 1 - 42, XP051784625, Retrieved from the Internet <URL:ftp://ftp.3gpp.org/Specs/archive/33_series/33.819/33819-120.zip 33819-120.doc> [retrieved on 20190922]
- "3rd Generation Partnership Project; Technical Specification Group Services and System Aspects; System architecture for the 5G System (5GS); Stage 2 (Release 16)", 17 December 2020 (2020-12-17), XP051966840, Retrieved from the Internet <URL:https://ftp.3gpp.org/3guInternal/3GPP_ultimate_versions_to_be_transposed/sentToDpc/23501-g70.zip 23501-g70.docx> [retrieved on 20201217]
- QUALCOMM INCORPORATED: "pCR: Solution for UE-UPF security setup", 3GPP DRAFT; S3-170834, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, 20 March 2017 (2017-03-20), Mobile Competence Centre ; 650, route des Lucioles ; F-06921 Sophia-Antipolis Cedex ; France , XP051258522

## Description

### TECHNICAL FIELD

This application relates to the field of communication technologies, and in particular, to a security parameter obtaining method, an apparatus, and a system.

### BACKGROUND

Currently, in an industrial scenario, to ensure security, service data of a private network is required not to be transmitted out of an industrial campus, and integrity and encryption of the service data of the private network are required to be strictly ensured. In consideration of costs, a private network and a public network usually share a radio access network and a core network (or a control plane of the core network). In such a shared deployment architecture, security of a private network service cannot be ensured.
Document "3rd Generation Partnership Project; Technical Specification Group Services and System Aspects; Security architecture and procedures for 5G system (Release 17), 3GPP draft; 33501 - H00, Mobile Competence Centre; 650, Route Des Lucioles; F-06921 SOPHIA-ANTIPOLIS CEDEX; France, no. 20201201, 14 December 2020" relates to an authentication method in non-public networks, in which, based on a root key, K_{AMF}, an intermediate key, K_{gnb}, is derived which is used to drive an air interface user plane key and sends the intermediate key to an access network device, and the access network device further derives the air interface user plane key and the air interface control plane key based on the intermediate key.
Document "3rd Generation Partnership Project; Technical Specification Group Services and System Aspects; Study on security for 5GS enhanced support of Vertical and LAN Services (Release 16), 3GPP standard; Technical Report; 3GPP TR 33.819, 3RD Generation partnership project (3GPP), Mobile Competence Centre; 650, Route Des Lucioles; F-06921 SOPHIA-ANTIPOLIS CEDEX; France, no. V1.2.0, 22 September 2019, pages 1 - 42" relates to an authentication method in standalone non-public networks, in which, a key, K_{AUSF}, is derived by an Authentication Server Function, AUSF, and User Equipment, UE, from an Extended Master Session Key, EMSK, created by a Extensible Authentication Protocol, EAP, authentication, and following key hierarchy, key derivation and key distribution are derived from K_{AUSF}.
Document "3rd Generation Partnership Project; Technical Specification Group Services and System Aspects; System architecture for the 5G System (5GS); Stage 2 (Release 16); 3GPP Draft; 23501-G70, 3RD Generation partnership project (3GPP), Mobile Competence Centre; 650, Route Des Lucioles; F-06921 SOPHIA-ANTIPOLIS CEDEX; France, 17 December 2020" relates to a communication method in which a Closed Access Group CAG, identifies is adopted to isolate non-public networks and public networks. The CAG is used for access control, e.g., authorization at cell selection and configured in subscription as part of Mobility Restrictions.
Document WO2020/212643 A1 relates to a communication method, which comprises: generating a first key based on a first input specific to a mobile device, wherein the first input comprises measurement of mutable code of the mobile device and a unique device secret, generating a symmetric second key on the basis of the first key and a second input specific to the mobile device, and generating authentication credentials on the basis of the second key for authenticating the mobile device to a mobile communications network.

### SUMMARY

The invention is defined by the appended claims. The description that follows is subjected to this limitation. Any disclosure lying outside the scope of said claims is only intended for illustrative as well as comparative purposes.

According to a first aspect, an embodiment of this application provides a security parameter obtaining method. The method may include: obtaining, by a network element of a private network, a root key of the private network of a terminal device, where the terminal device sets up a control plane connection to a network element of a public network; generating, by the network element of the private network, a first security parameter of the terminal device based on the root key of the private network, where the first security parameter is used to derive an air interface user plane key of the private network of the terminal device; and sending, by the network element of the private network, the first security parameter to an access network device of the terminal device. According to the foregoing method, the network element of the private network generates the security parameter used to derive the air interface user plane key. Because the network element of the private network is not shared with the public network, security of a manner for deriving the security parameter can be ensured. In addition, the security parameter used to derive the air interface user plane key is generated by using the root key of the private network. Because the root key of the private network is located in the private network, it can be ensured that the root key of the private network is not known to the public network, to ensure security of the root key of the private network. Further, when the air interface user plane key is used to securely transmit service data, security of service data transmission over an air interface can be improved.

In a possible design, the network element of the private network may be a session management network element of the private network or an authentication network element of the private network.

In a possible design, the obtaining a root key of the private network of a terminal device includes: obtaining the root key of the private network based on an identifier of the terminal device; or obtaining the root key of the private network based on a service identifier of the terminal device. In the foregoing design, the root key of the private network may be at a user granularity, or may be at a service granularity. For example, different terminal devices use different root keys of the private network, to improve security of the root keys. For example, different services use different root keys of the private network, to improve transmission security of the different services.

In a possible design, the identifier of the terminal device may include one or more of the following: a subscription permanent identifier SUPI, a generic public subscription identifier GPSI, or a subscription concealed identifier SUCI.

In a possible design, the service identifier of the terminal device includes one or more of the following: a data network name DNN or a quintet.

In a possible design, the obtaining a root key of the private network of a terminal device includes: obtaining the root key of the private network of the terminal device from local configuration information.

In a possible design, the obtaining a root key of the private network of a terminal device includes: obtaining the root key of the private network based on the identifier of the terminal device, where the local configuration information includes a correspondence between the identifier of the terminal device and the root key of the private network; or obtaining the root key of the private network from the local configuration information based on the service identifier of the terminal device, where the local configuration information includes a correspondence between the service identifier of the terminal device and the root key of the private network.

In a possible design, the network element of the private network is a session management network element of the private network. The obtaining a root key of the private network of a terminal device includes: obtaining the root key of the private network of the terminal device from an authentication network element.

In a possible design, the obtaining the root key of the private network of the terminal device from an authentication network element includes: obtaining the root key of the private network from the authentication network element based on the identifier of the terminal device, where the authentication network element stores the root key of the private network corresponding to the identifier of the terminal device; or obtaining the root key of the private network from the authentication network element based on the service identifier of the terminal device, where the authentication network element stores the root key of the private network corresponding to the identifier of the terminal device.

In a possible design, the method may further include: receiving first parameter information, where the first parameter information indicates to generate the first security parameter by using the root key of the private network. The obtaining a root key of the private network of a terminal device includes: obtaining the root key of the private network based on the first parameter information. For example, if the first parameter information is received, and it is determined, based on the first parameter information, that the first security parameter is generated by using the root key of the private network, the network element of the private network performs a procedure of obtaining the root key of the private network to generate the first security parameter. For another example, if the first parameter information is not received, the network element of the private network may not perform a procedure of obtaining the root key of the private network to generate the first security parameter.

In a possible design, the method further includes: receiving second parameter information, where the second parameter information indicates that the air interface control plane key and the air interface user plane key of the terminal device are separated from each other. The obtaining a root key of the private network of a terminal device includes: obtaining the root key of the private network based on the second parameter information. According to the foregoing solution, if the second parameter information is received, the network element of the private network obtains the key of the private network. For example, if the second parameter information is not received, the network element of the private network may not perform the procedure of obtaining the root key of the private network to generate the first security parameter.

In a possible design, the obtaining the root key of the private network based on the first parameter information includes:
obtaining the root key of the private network when it is determined, based on the first parameter information and the local configuration information, that the first security parameter needs to be generated by using the root key of the private network; obtaining the root key of the private network when it is determined, based on the first parameter information and user subscription data of the terminal device, that the first security parameter is generated by using the root key of the private network; or obtaining the root key of the private network when it is determined, based on the first parameter information, the local configuration information, and user subscription data of the terminal device, that the first security parameter is generated by using the root key of the private network.

The first parameter information includes the data network name DNN, the identifier of the terminal device, or the quintet.

In a possible design, the method further includes: obtaining a security parameter key. The sending the first security parameter to an access network device of the terminal device includes: encrypting the first security parameter by using the security parameter key, and sending an encrypted first security parameter to the access network device.

In the foregoing design, the first security parameter is transmitted in an encryption manner in a transmission process. The first security parameter is not transparent to a forwarding network element, and the first security parameter cannot be known. Therefore, security of the first security parameter is improved, so that security of the air interface user plane key derived by using the first security parameter is improved.

In a possible design, the obtaining a tunnel key includes: obtaining the security parameter key from the local configuration information; obtaining the security parameter key from the user subscription data of the terminal device; or obtaining the security parameter key from the authentication network element.

In a possible design, the obtaining a security parameter key includes: obtaining the security parameter key based on third parameter information, where the third parameter information includes one or more of an identifier of the access network device, the DNN, or single network slice selection assistance information S-NSSAI.

In a possible design, the method further includes: receiving the third parameter information from a control plane network element of the public network.

In a possible design, the obtaining a security parameter key includes: setting up a security tunnel to the access network device, where the security parameter key is a key of the security tunnel. The encrypting the first security parameter by using the tunnel key, and sending an encrypted first security parameter to the access network device includes: sending the first security parameter to the access network device through the security tunnel.

For example, the security tunnel is an IPsec tunnel. The security tunnel is set up to ensure security of transmission of the first security parameter. This improves security of the air interface user plane key derived by using the first security parameter.

In a possible design, the setting up a security tunnel to the access network device includes: requesting the access network device through the control plane network element of the public network to set up the security tunnel to the access network device. In the foregoing design, a control plane of the public network is used as a forwarding network element of the security tunnel, to provide a feasible security tunnel setup solution.

In a possible design, the requesting the access network device through the control plane network element of the public network to set up the security tunnel to the access network device includes: sending a request message to the control plane network element of the public network, where the request message is used to request to set up the security tunnel to the access network device; and receiving a response message sent by the control plane network element of the public network, where the response message is used to respond to completion of setup of the security tunnel. The sending the first security parameter to the access network device through the security tunnel includes: sending the first security parameter to the control plane network element of the public network.

In a possible design, the method further includes: sending a first indication to the control plane network element of the public network, where the first indication indicates the control plane network element of the public network to forward the request message to the access network device.

In a possible design, the setting up a security tunnel to the access network device includes: sending address information of the network element of the private network to the access network device, where the address information of the network element of the private network enables the access network device to request to set up the security tunnel. In the foregoing design, the network element of the private network sends the address information of the network element of the private network to the access network device, so that the access network device can request to set up the security tunnel based on the address information of the network element of the private network.

The address information of the network element of the private network may include an IP address of the network element of the private network and/or a port number of the network element of the private network.

In a possible design, the sending address information of the network element of the private network to the access network device includes: sending the address information of the network element of the private network to the access network device in a session setup or modification procedure.

In a possible design, the network element of the private network may set up the security tunnel to the access network device through a user plane network element of the private network.

According to a second aspect, an embodiment of this application provides another security parameter obtaining method, including: obtaining, by an access network device, a first security parameter from a network element of a private network, where the first security parameter is used to derive an air interface user plane key of a terminal device; obtaining, by the access network device, a second security parameter from a network element of a public network, where the second security parameter is used to derive an air interface control plane key of the terminal device; and deriving, by the access network device, the air interface user plane key based on the first security parameter, and deriving the air interface control plane key based on the second security parameter.

In the foregoing solution provided in this application, the network element of the public network generates the security parameter used to derive the air interface control plane key, and the network element of the private network generates the security parameter used to derive the air interface user plane key. Because the network element of the private network is not shared with the public network, security of the security parameter used to derive the air interface user plane key can be ensured. In addition, the security parameter used to derive the air interface user plane key is generated by using a root key of the private network. Because the root key of the private network is located in the private network, it can be ensured that the root key of the private network is not known to the public network, to ensure security of the root key of the private network. Further, when the air interface user plane key is used to securely transmit service data, security of service data transmission over an air interface can be improved.

In a possible design, the first security parameter is encrypted by using a security parameter key. The deriving the air interface user plane key based on the first security parameter includes: decrypting the first security parameter by using the security parameter key, and deriving the air interface user plane key by using a decrypted first security parameter. In the foregoing design, the first security parameter is transmitted in an encryption manner in a transmission process, so that another network element responsible for forwarding cannot learn content of an encrypted first security parameter. This improves security of transmitting the first security parameter, and improves security of the air interface user plane key derived by using the first security parameter.

For example, the network element of the private network may be a session management network element of the private network or an authentication network element of the private network.

In a possible design, the security parameter key used by the access network device for decryption is preconfigured on the access network device, or is obtained by the access network device from a network management network element.

In a possible design, the obtaining a first security parameter from a network element of a private network includes: receiving the first security parameter from the network element of the private network through a security tunnel set up between the network element of the private network and the access network device. According to the foregoing method, the security tunnel is set up to transmit the first security parameter. This improves security of transmitting the first security parameter, and improves security of the air interface user plane key derived by using the first security parameter.

For example, the network element of the private network may be a session management network element of the private network.

In a possible design, the method further includes: requesting, by the access network device, the network element of the private network through a user plane network element of the private network to set up the security tunnel.

In a possible design, the requesting the network element of the private network through a user plane network element of the private network to set up the security tunnel includes: obtaining address information of the network element of the private network; and requesting, based on the address information of the network element of the private network, the user plane network element of the private network to set up the security tunnel.

For example, the network element of the private network may be a session management network element of the private network.

In a possible design, the address information of the network element of the private network includes an internet protocol IP address and/or a port number of the network element of the private network.

In a possible design, the requesting the network element of the private network through a user plane network element of the private network to set up the security tunnel includes: sending a request message to the user plane network element of the private network, where the request message is used to request to set up the security tunnel to the network element of the private network; and receiving a response message sent by the user plane network element of the private network, where the response message indicates completion of setup of the security tunnel. The obtaining a first security parameter from a network element of a private network includes: receiving the first security parameter that is sent by the network element of the private network through the user plane network element of the private network.

In a possible design, the method further includes: sending a first indication to the user plane network element of the private network, where the first indication indicates the user plane network element of the private network to forward the request message to the network element of the private network.

In a possible design, the method further includes: requesting, by the access network device, the network element of the private network through the network element of the public network to set up the security tunnel.

In a possible design, the requesting the network element of the private network through the network element of the public network to set up the security tunnel includes: sending a request message to the network element of the public network, where the request message is used to request to set up the security tunnel to the network element of the private network; and receiving a response message sent by the network element of the public network, where the response message indicates completion of setup of the security tunnel. The obtaining a first security parameter from a network element of a private network includes: receiving the first security parameter that is sent by the network element of the private network through the network element of the public network.

According to a third aspect, an embodiment of this application provides still another security parameter obtaining method, including: receiving, by a network element of a public network, first parameter information from a terminal device, where the first parameter information indicates to derive an air interface user plane key of the terminal device by using a root key that is of a private network and that corresponds to the terminal device; selecting, by the network element of the public network, a session management network element of the private network based on the first parameter information; and sending, by the network element of the public network, the first parameter information to the session management network element of the private network.

According to the foregoing method, because the session management network element of the private network is not shared with the public network, security of a manner for deriving a security parameter can be ensured. In addition, because the root key of the private network is located in the private network, it can be ensured that the root key of the private network is not known to the public network, to ensure security of the root key of the private network. Further, when the air interface user plane key is used to securely transmit service data, security of service data transmission over an air interface can be improved.

In a possible design, the method further includes: receiving second parameter information from the terminal device, where the second parameter information indicates that an air interface control plane key and the air interface user plane key of the terminal device are separated from each other.

In a possible design, the method further includes: receiving a request message from a network element of the private network, where the request message is used to request to set up a security tunnel to an access network device; and sending the request message to the access network device.

In a possible design, the method further includes: receiving a first indication from the network element of the private network, where the first indication indicates the network element of the public network to forward the request message to the access network device. The sending the request message to the access network device includes: sending the request message to the access network device based on the first indication.

In a possible design, the method further includes: receiving a first security parameter from the network element of the private network, where the first security parameter is used to derive the air interface user plane key of the terminal device; and forwarding the first security parameter to the access network device.

According to a fourth aspect, an embodiment of this application provides yet another security parameter obtaining method, including: receiving, by a user plane network element of a private network, a request message from an access network device, where the request message is used to request to set up a security tunnel to a network element of the private network, the security tunnel is used to transmit a first security parameter to be sent by the network element of the private network to the access network device, and the first security parameter is used to derive an air interface user plane key of a terminal device; and sending, by the user plane network element of the private network, the request message to the network element of the private network.

According to the foregoing method, the security parameter is transferred through the security tunnel, to ensure that a root key of the private network and the security parameter are not known to a public network. Further, when the air interface user plane key is used to securely transmit service data, security of service data transmission over an air interface can be improved.

In a possible design, the method further includes: receiving a first indication from the access network device, where the first indication indicates the user plane network element of the private network to forward the request message to the network element of the private network. The sending the request message to the network element of the private network includes: sending the request message to the network element of the private network based on the first indication.

In a possible design, the request message carries address information of the network element of the private network. The sending the request message to the network element of the private network includes: forwarding the request message to the network element of the private network according to a forwarding rule corresponding to the address information.

In a possible design, the forwarding the request message to the network element of the private network according to a forwarding rule corresponding to the address information includes: sending the request message to the network element of the private network through an N4 interface according to the forwarding rule corresponding to the address information.

In a possible design, the method further includes: receiving the first security parameter from the network element of the private network; and
sending the first security parameter to the access network device.

According to a fifth aspect, an embodiment of this application provides still yet another security parameter obtaining method, including: receiving, by a terminal device, a first auxiliary parameter from a network element of a private network, where the first auxiliary parameter is used to derive an air interface user plane key of the terminal device; receiving, by the terminal device, a second auxiliary parameter from a network element of a public network, where the second auxiliary parameter is used to derive an air interface control plane key of the terminal device; and deriving, by the terminal device, the air interface user plane key based on the first auxiliary parameter, and deriving the air interface control plane key based on the second auxiliary parameter.

According to the foregoing method, because the network element of the private network is not shared with the public network, security of a manner for deriving a security parameter can be ensured. In addition, because a root key of the private network is located in the private network, it can be ensured that the root key of the private network is not known to the public network, to ensure security of the root key of the private network. Further, when the air interface user plane key is used to securely transmit service data, security of service data transmission over an air interface can be improved.

In a possible design, before the terminal device receives a first security parameter from the network element of the private network, the method further includes: sending, by the terminal device, first parameter information to the network element of the public network, where the first parameter information indicates to derive the first security parameter by using the root key of the private network.

In a possible design, the method further includes: sending second parameter information to the network element of the public network, where the second parameter information indicates that the air interface control plane key and the air interface user plane key of the terminal device are separated from each other.

According to a sixth aspect, a communication apparatus is provided. For example, the communication apparatus is the foregoing network element of the private network, for example, the session management network element of the private network or the authentication network element of the private network. The communication apparatus has a function of implementing behavior in the method embodiment in the first aspect. The function may be implemented by hardware, or may be implemented by hardware by executing corresponding software. The hardware or the software includes one or more modules corresponding to the function. In a possible design, the communication apparatus includes, for example, a transceiver module and a processing module that are coupled to each other. The processing module is configured to obtain a root key of the private network of a terminal device, where the terminal device sets up a control plane connection to a network element of a public network. The processing module is further configured to generate a first security parameter of the terminal device based on the root key of the private network, where the first security parameter is used to derive an air interface user plane key of the private network of the terminal device. The transceiver module is configured to send the first security parameter to an access network device of the terminal device. These modules may perform corresponding functions in the method example in the first aspect. For details, refer to the detailed descriptions in the method example. Details are not described herein again.

For technical effects brought by the sixth aspect or the possible designs of the sixth aspect, refer to the descriptions of the technical effects brought by the first aspect or the possible designs of the first aspect.

According to a seventh aspect, a communication apparatus is provided. For example, the communication apparatus is the foregoing access network device. The communication apparatus has a function of implementing behavior in the method embodiment in the second aspect. The function may be implemented by hardware, or may be implemented by hardware by executing corresponding software. The hardware or the software includes one or more modules corresponding to the function. In a possible design, the communication apparatus includes, for example, a transceiver module and a processing module that are coupled to each other. The transceiver module is configured to obtain a first security parameter from a network element of a private network, where the first security parameter is used to derive an air interface user plane key of a terminal device. The transceiver module is further configured to obtain a second security parameter from a network element of a public network, where the second security parameter is used to derive an air interface control plane key of the terminal device. The processing module is configured to: derive the air interface user plane key based on the first security parameter, and derive the air interface control plane key based on the second security parameter. These modules may perform corresponding functions in the method example in the second aspect. For details, refer to the detailed descriptions in the method example. Details are not described herein again.

For technical effects brought by the seventh aspect or the possible designs of the seventh aspect, refer to the descriptions of the technical effects brought by the second aspect or the possible implementations of the second aspect.

According to an eighth aspect, a communication apparatus is provided. For example, the communication apparatus is the foregoing network element of the public network. The communication apparatus has a function of implementing behavior in the method embodiment in the third aspect. The function may be implemented by hardware, or may be implemented by hardware by executing corresponding software. The hardware or the software includes one or more modules corresponding to the function. In a possible design, the communication apparatus includes, for example, a transceiver module and a processing module that are coupled to each other. The transceiver module is configured to receive first parameter information from a terminal device, where the first parameter information indicates to derive an air interface user plane key of the terminal device by using a root key that is of a private network and that corresponds to the terminal device. The processing module is configured to select a session management network element of the private network based on the first parameter information. The transceiver module is further configured to send the first parameter information to the session management network element of the private network. These modules may perform corresponding functions in the method example in the third aspect. For details, refer to the detailed descriptions in the method example. Details are not described herein again.

For technical effects brought by the eighth aspect or the possible designs of the eighth aspect, refer to the descriptions of the technical effects brought by the third aspect or the possible implementations of the third aspect.

According to a ninth aspect, a communication apparatus is provided. For example, the communication apparatus is the foregoing user plane network element of the private network. The communication apparatus has a function of implementing behavior in the method embodiment in the fourth aspect. The function may be implemented by hardware, or may be implemented by hardware by executing corresponding software. The hardware or the software includes one or more modules corresponding to the function. In a possible design, the communication apparatus includes, for example, a receiving module and a sending module that are coupled to each other. The receiving module is configured to receive a request message from an access network device, where the request message is used to request to set up a security tunnel to a network element of a private network, the security tunnel is used to transmit a first security parameter to be sent by the network element of the private network to the access network device, and the first security parameter is used to derive an air interface user plane key of a terminal device. The sending module is configured to send the request message to the network element of the private network. These modules may perform corresponding functions in the method example in the fourth aspect. For details, refer to the detailed descriptions in the method example. Details are not described herein again.

For technical effects brought by the ninth aspect or the possible designs of the ninth aspect, refer to the descriptions of the technical effects brought by the fourth aspect or the possible implementations of the fourth aspect.

According to a tenth aspect, a communication apparatus is provided. For example, the communication apparatus is the foregoing terminal device. The communication apparatus has a function of implementing behavior in the method embodiment in the fifth aspect. The function may be implemented by hardware, or may be implemented by hardware by executing corresponding software. The hardware or the software includes one or more modules corresponding to the function. In a possible design, the communication apparatus includes, for example, a transceiver module and a processing module that are coupled to each other. The transceiver module is configured to receive a first security parameter from a network element of a private network, where the first security parameter is used to derive an air interface user plane key of the terminal device. The transceiver module is further configured to receive a second security parameter from a network element of a public network, where the second security parameter is used to derive an air interface control plane key of the terminal device. The processing module is configured to: derive the air interface user plane key based on the first security parameter, and derive the air interface control plane key based on the second security parameter. These modules may perform corresponding functions in the method example in the fifth aspect. For details, refer to the detailed descriptions in the method example. Details are not described herein again.

For technical effects brought by the tenth aspect or the possible designs of the tenth aspect, refer to the descriptions of the technical effects brought by the fifth aspect or the possible implementations of the fourth aspect.

According to an eleventh aspect, a communication apparatus is provided. The communication apparatus may be the network element of the private network in the foregoing method design or a chip disposed in the network element of the private network. The communication apparatus includes a communication interface and a processor, and optionally, further includes a memory. The memory is configured to store a computer program or instructions. The processor is coupled to the memory and the communication interface. When the processor executes the computer program or the instructions, the communication apparatus is enabled to perform the method performed by the network element of the private network in the foregoing method embodiment.

According to a twelfth aspect, a communication apparatus is provided. The communication apparatus may be the access network device in the foregoing method design or a chip disposed in the access network device. The communication apparatus includes a communication interface and a processor, and optionally, further includes a memory. The memory is configured to store a computer program or instructions. The processor is coupled to the memory and the communication interface. When the processor executes the computer program or the instructions, the communication apparatus is enabled to perform the method performed by the access network device in the foregoing method embodiment.

According to a thirteenth aspect, a communication apparatus is provided. The communication apparatus may be the network element of the public network in the foregoing method design or a chip disposed in the network element of the public network. The communication apparatus includes a communication interface and a processor, and optionally, further includes a memory. The memory is configured to store a computer program or instructions. The processor is coupled to the memory and the communication interface. When the processor executes the computer program or the instructions, the communication apparatus is enabled to perform the method performed by the network element of the public network in the foregoing method embodiment.

According to a fourteenth aspect, a communication apparatus is provided. The communication apparatus may be the user plane network element of the private network in the foregoing method design or a chip disposed in the user plane network element of the private network. The communication apparatus includes a communication interface and a processor, and optionally, further includes a memory. The memory is configured to store a computer program or instructions. The processor is coupled to the memory and the communication interface. When the processor executes the computer program or the instructions, the communication apparatus is enabled to perform the method performed by the user plane network element of the private network in the foregoing method embodiment.

According to a fifteenth aspect, a communication apparatus is provided. The communication apparatus may be the terminal device in the foregoing method design or a chip disposed in the terminal device. The communication apparatus includes a communication interface and a processor, and optionally, further includes a memory. The memory is configured to store a computer program or instructions. The processor is coupled to the memory and the communication interface. When the processor executes the computer program or the instructions, the communication apparatus is enabled to perform the method performed by the terminal device in the foregoing method embodiment.

The communication interface in the communication apparatus in the tenth aspect to the fifteenth aspect may be a transceiver in the communication apparatus, and for example, is implemented by an antenna, a feeder, and a codec in the communication apparatus. Alternatively, if the communication apparatus is a chip disposed in a communication apparatus, the communication interface may be an input/output interface of the chip, for example, an input/output pin.

According to a sixteenth aspect, a communication system is provided. The communication system includes a network element of a private network and a network element of a public network. The network element of the private network is configured to perform the method in the first aspect or any design of the first aspect. For example, the network element of the private network is configured to send a first security parameter to an access network device, where the first security parameter is used to derive an air interface user plane key of a terminal device; and the network element of the public network is configured to send a second security parameter to the access network device, where the second security parameter is used to derive an air interface control plane key of the terminal device.

In a possible design, the network element of the private network includes a session management network element of the private network or an authentication network element of the private network.

In a possible design, the system further includes the access network device, configured to:
receive the first security parameter from the network element of the private network and the second security parameter from the network element of the public network;
derive the air interface user plane key of the terminal device based on the first security parameter; and
derive the air interface control plane key of the terminal device based on the second security parameter.

According to a seventeenth aspect, this application provides a chip system. The chip system includes a processor, configured to implement a function of the network element of the private network, the access network device, the network element of the public network, the user plane network element of the private network, or the terminal device in the methods in the foregoing aspects. In a possible design, the chip system further includes a memory, configured to store program instructions and/or data. The chip system may include a chip, or may include a chip and another discrete device.

According to an eighteenth aspect, a computer program product is provided. The computer program product includes computer program code. When the computer program code is run, the method performed by the network element of the private network, the access network device, the network element of the public network, the user plane network element of the private network, or the terminal device in the foregoing aspects is performed.

According to a nineteenth aspect, this application provides a computer-readable storage medium. The computer-readable storage medium stores a computer program. When the computer program is run, the method performed by the network element of the private network, the access network device, the network element of the public network, the user plane network element of the private network, or the terminal device in the foregoing aspects is implemented.

### BRIEF DESCRIPTION OF DRAWINGS

FIG. 1 is a schematic diagram of a possible communication network architecture according to an embodiment of this application;
FIG. 2 is a schematic diagram of another possible communication network architecture according to an embodiment of this application;
FIG. 3 is a schematic diagram of still another possible communication network architecture according to an embodiment of this application;
FIG. 4 is a schematic diagram of a possible communication system architecture according to an embodiment of this application;
FIG. 5A and FIG. 5B are a schematic flowchart of a possible security parameter obtaining method according to an embodiment of this application;
FIG. 6 is a schematic flowchart of another possible security parameter obtaining method according to an embodiment of this application;
FIG. 7A is a schematic flowchart of still another possible security parameter obtaining method according to an embodiment of this application;
FIG. 7B is a schematic flowchart of yet another possible security parameter obtaining method according to an embodiment of this application;
FIG. 7C is a schematic flowchart of still yet another possible security parameter obtaining method according to an embodiment of this application;
FIG. 8 is a schematic diagram of another possible communication system architecture according to an embodiment of this application;
FIG. 9A and FIG. 9B are a schematic flowchart of a possible security parameter obtaining method according to Example 1 of this application;
FIG. 10A and FIG. 10B are a schematic flowchart of a possible security parameter obtaining method according to Example 2 of this application;
FIG. 11A and FIG. 11B are a schematic flowchart of a possible security parameter obtaining method according to Example 3 of this application;
FIG. 12A and FIG. 12B are a schematic flowchart of a possible security parameter obtaining method according to Example 4 of this application;
FIG. 13 is a schematic diagram of still another possible communication system architecture according to an embodiment of this application;
FIG. 14A and FIG. 14B are a schematic flowchart of a possible security parameter obtaining method according to Example 5 of this application;
FIG. 15 is a schematic diagram of a communication apparatus 1500 according to an embodiment of this application; and
FIG. 16 is a schematic diagram of a communication apparatus 1600 according to an embodiment of this application.

### DESCRIPTION OF EMBODIMENTS

Embodiments of this application may be applied to a fourth generation mobile communication technology (the 4th Generation mobile communication technology, 4G) network architecture, for example, a long term evolution (long term evolution, LTE) system, and may also be applied to a fifth generation mobile communication technology (the 5th Generation mobile communication technology, 5G) network architecture, for example, an NR system, a sixth generation mobile communication technology network architecture later than the 5G network architecture, or another similar communication system. This is not specifically limited.

The following first describes technical terms used in embodiments of this application.
(1) An access network (access network, AN) device includes a radio access network (radio access network, RAN) device, for example, a base station (such as an access point), and may be a device that communicates with a wireless terminal device over an air interface in an access network through one or more cells. Alternatively, for example, an access network device in a vehicle-to-everything (vehicle-to-everything, V2X) technology is a road side unit (road side unit, RSU). The base station may be configured to perform mutual conversion between a received over-the-air frame and an IP packet, and is used as a router between the terminal device and a remaining part of the access network. The remaining part of the access network may include an IP network. The RSU may be a fixed infrastructure entity supporting a V2X application, and may exchange a message with another entity supporting the V2X application. The access network device may further coordinate attribute management of the air interface. For example, the access network device may include an evolved NodeB (NodeB, eNB, or e-NodeB, evolved NodeB) in an LTE system or a long term evolution-advanced (long term evolution-advanced, LTE-A) system, may include a next generation NodeB (next generation NodeB, gNB) in a fifth generation (the 5th generation, 5G) NR system (also referred to as an NR system for short), or may include a central unit (central unit, CU) and a distributed unit (distributed unit, DU) in a cloud radio access network (cloud radio access network, Cloud RAN) system. This is not limited in embodiments of this application.
   In embodiments of this application, an apparatus configured to implement a function of the access network device may be the access network device, or may be an apparatus, for example, a chip or a chip system, that can support the access network device in implementing the function. The apparatus may be installed in the access network device. In technical solutions provided in embodiments of this application, the technical solutions provided in embodiments of this application are described by using an example in which the apparatus configured to implement the function of the access network device is the access network device.
(2) The terminal device includes a device that provides voice and/or data connectivity for a user, and specifically, includes a device that provides voice for a user, or includes a device that provides data connectivity for a user, or includes a device that provides voice and data connectivity for a user. For example, the terminal device may include a handheld device having a wireless connection function, or a processing device connected to a wireless modem. The terminal device may communicate with a core network through a RAN, and exchange voice or data with the RAN, or exchange voice and data with the RAN. The terminal device may include user equipment (user equipment, UE), a wireless terminal device, a mobile terminal device, a device-to-device (device-to-device, D2D) communication terminal device, a vehicle-to-everything (vehicle-to-everything, V2X) terminal device, a machine-to-machine/machine-type communication (machine-to-machine/machine-type communication, M2M/MTC) terminal device, an internet of things (internet of things, IoT) terminal device, a subscriber unit (subscriber unit), a subscriber station (subscriber station), a mobile station (mobile station), a remote station (remote station), an access point (access point, AP), a remote terminal (remote terminal), an access terminal (access terminal), a user terminal (user terminal), a user agent (user agent), a user device (user device), or the like. For example, the terminal device may include a mobile phone (or referred to as a "cellular" phone), a computer with a mobile terminal device, or a portable, pocket-sized, handheld, or computer built-in mobile apparatus. For example, the terminal device may be a device such as a personal communication service (personal communication service, PCS) phone, a cordless telephone set, a session initiation protocol (session initiation protocol, SIP) phone, a wireless local loop (wireless local loop, WLL) station, or a personal digital assistant (personal digital assistant, PDA). The terminal device further includes a limited device, for example, a device with low power consumption, a device with a limited storage capacity, or a device with a limited computing capability. For example, the terminal device includes an information sensing device such as a barcode, radio frequency identification (radio frequency identification, RFID), a sensor, a global positioning system (global positioning system, GPS), or a laser scanner.

As an example instead of a limitation, the terminal device in embodiments of this application may alternatively be a wearable device. The wearable device may also be referred to as a wearable intelligent device, an intelligent wearable device, or the like, and is a general term for wearable devices that are intelligently designed and developed for daily wear by using a wearable technology, for example, glasses, gloves, watches, clothes, and shoes. The wearable device is a portable device that is worn on a body directly or integrated into clothes or an accessory of a user. The wearable device is not only a hardware device, but also implements a powerful function through software support, data exchange, and cloud interaction. In a broad sense, wearable intelligent devices include full-featured and large-sized devices that can implement all or a part of functions without relying on smartphones, for example, smart watches or smart glasses, and include devices that focus only on a specific type of application function and need to be used together with other devices such as smartphones, for example, various smart bands, smart helmets, or smart jewelry for monitoring physical signs.

If any one of the various terminal devices described above is located in a vehicle (for example, placed in the vehicle or installed in the vehicle), the terminal device may be considered as a vehicle-mounted terminal device. For example, the vehicle-mounted terminal device is also referred to as an on-board unit (on-board unit, OBU).

In embodiments of this application, the terminal device may alternatively include a relay (relay). Alternatively, it is understood as that any device that can perform data communication with a base station may be considered as a terminal device.

In embodiments of this application, an apparatus configured to implement a function of the terminal device may be the terminal device, or may be an apparatus, for example, a chip or a chip system, that can support the terminal device in implementing the function. The apparatus may be installed in the terminal device. In embodiments of this application, the chip system may include a chip, or may include a chip and another discrete device. In the technical solutions provided in embodiments of this application, the technical solutions provided in embodiments of this application are described by using an example in which the apparatus configured to implement the function of the terminal is the terminal device.

(3) A network element in embodiments of this application may be hardware, may be software obtained through functional division, or may have a structure obtained by combining hardware and software. The network element may include a core network element, an access network element (also referred to as an access network device), or the like. The core network element includes, for example, a mobility management network element, an authentication network element, or a data management network element.

The mobility management network element is responsible for access and mobility management of a terminal device in a mobile network. The mobility management network element may include an access and mobility management entity (access and mobility management function, AMF) in 5G, a mobility management entity (mobility management entity, MME) in 4G, or all or a part of control functions formed after the foregoing network elements are integrated. In future communication (for example, in 6G or another network), the mobility management network element may be an AMF network element or have another name. This is not limited in this application. In a subsequent description of this application, an example in which the mobility management network element is an AMF network element is used.

The data management network element is configured to help an operator implement unified management of user-related data. The data management network element may include, for example, a subscriber data management (subscriber data management, SDM) network element, a unified data management (unified data management, UDM) network element, or a home subscriber server (home subscriber server, HSS) network element.

The session management network element is responsible for managing a user service, for example, may be a session management function (session management function, SMF) network element in 5G. In future communication (for example, 6G or another network), the session management network element may be an SMF network element or have another name. This is not limited in this application.

The authentication network element may be, for example, an AAA server (AAA Service, AAA-S), or another network element that can implement user authentication, terminal device authentication, or network slice authentication. AAA refers to authentication (Authentication), authorization (Authorization), and accounting (Accounting). The AAA-S is mainly to manage which users can access a network server, which services can be obtained by a user that has access right, and how to charge a user that is using network resources. In a subsequent description of this application, an example in which the authentication network element is an AAA server is used.

(4) Terms "system" and "network" may be usually used interchangeably in this specification. The term "and/or" in this specification describes only an association relationship between associated objects and indicates that three relationships may exist. For example, A and/or B may indicate the following three cases: Only A exists, both A and B exist, and only B exists. In addition, the character "/" in this specification usually indicates an "or" relationship between associated objects. The term "at least one" in this application means one or more, that is, includes one, two, three, or more; and the term "a plurality of" means two or more, that is, includes two, three, or more. "At least one of the following items (pieces)" or a similar expression thereof indicates any combination of these items, including a single item (piece) or any combination of a plurality of items (pieces). For example, at least one item (piece) of a, b, or c may indicate a, b, c, a and b, a and c, b and c, or a, b, and c, where a, b, and c may be singular or plural. It should be understood that in embodiments of this application, "B corresponding to A" indicates that B is associated with A, and B may be determined based on A. However, it should be further understood that determining B based on A does not mean that B is determined based only on A. B may alternatively be determined based on A and/or other information. In addition, unless otherwise specified, ordinal numbers such as "first" and "second" in embodiments of this application are for distinguishing between a plurality of obj ects, but are not intended to limit an order, a time sequence, priorities, or importance of the plurality of objects. In addition, terms "include" and "have" in embodiments, claims, and accompanying drawings of this application are not exclusive. For example, a process, method, system, product, or device that includes a series of steps or modules is not limited to listed steps or modules, but may also include steps or modules that are not listed.

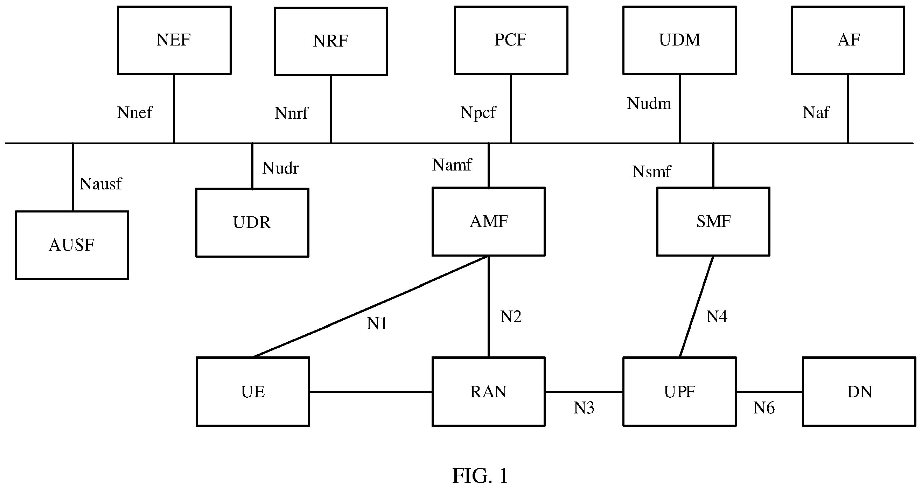

A 5G communication network architecture is used as an example. FIG. 1, FIG. 2, and FIG. 3 are schematic diagrams of examples of three possible 5G communication network architectures according to embodiments of this application. The communication network architecture may include a terminal device and a data network (data network, DN). The communication network architecture may further include one or more of the following network elements: an authentication server function (authentication server function, AUSF) network element, a network exposure function (network exposure function, NEF) network element, a policy control function (policy control function, PCF) network element, a unified data management (unified data management, UDM) network element, a unified data repository (unified data repository, UDR), a network repository function (network repository function, NRF) network element, an application function (application function, AF) network element, an access and mobility management function (access and mobility management function, AMF) network element, a session management function (session management function, SMF) network element, a RAN network element, a user plane function (user plane function, UPF) network element, a unified data repository (unified data repository, UDR) function network element, and the like. In the foregoing network elements, a part other than a radio access network part may also be referred to as a core network part.

The following briefly describes functions of the foregoing network elements.

The AMF network element is responsible for mobility management of a user, including mobility status management, user temporary identity allocation, and user authentication and authorization.

The SMF network element is responsible for UPF network element selection, UPF network element reselection, internet protocol (Internet Protocol, IP) address assignment, bearer setup, modification, and release, and QoS control.

The PCF network element includes functions of policy control decision and flow-based charging control, and includes a user subscription data management function, a policy control function, a charging policy control function, QoS control, and the like.

The UDM network element is responsible for managing subscription data, and notifying a corresponding network element when the subscription data is modified.

The UDR network element is responsible for storing and retrieving subscription data, policy data, common architecture data, and the like, and is used for the UDM, the PCF, and the NEF to obtain related data. The UDR needs to provide different data access authentication mechanisms for different types of data, such as subscription data and policy data, to ensure data access security. For an invalid service-based operation or a data access request, the UDR needs to return a failure response with a proper cause value.

The AF network element is configured to provide an application layer service for UE. When providing the service for the UE, the AF has requirements on a quality of service QoS policy (Policy) and a charging (Charging) policy, and needs to notify a network. In addition, the AF also needs application-related information fed back by another network element of a core network.

The NEF network element mainly supports a network capability exposure function, and exposes a network capability and a service to the outside. A 3rd generation partnership project (3rd generation partnership project, 3GPP) network function (network function, NF) releases a function and an event to another NF through the NEF. The capability and the event that are exposed by the NF can be securely exposed to a third-party application. The NEF uses a standard interface (Nudr) of the UDR to store and retrieve structured data, and translates exchange information of the AF and exchange information of an internal network function, for example, performs conversion between AF-service (Service)-identifier (Identifier) and internal 5G core information. The internal 5G core information may be, for example, a data network name (data network name, DNN) or single network slice selection assistance information (single network slice selection assistance information, S-NSSAI).

The UPF network element supports all or a part of the following functions: interconnecting a protocol data unit (protocol data unit, PDU) session with a data network; a packet routing and forwarding function, for example, supporting forwarding of traffic to the data network after performing downlink offloading (uplink classifier) on the traffic; supporting a branching point (Branching point) function to support a multi-homed (multi-homed) PDU session; and a packet detection function.

The AUSF network element is responsible for an authentication function or is responsible for performing a network slice specific authentication and authorization (network slice specific authentication and authorization, NSSAA) procedure.

Untrusted non-3GPP access network (untrusted non-3GPP access network) device: This device allows a terminal device to interconnect with a 3GPP core network by using a non-3GPP technology, where the non-3GPP technology includes: wireless fidelity (wireless fidelity, Wi-Fi), worldwide interoperability for microwave access (worldwide interoperability for microwave access, WiMAX), and code division multiple access (code division multiple access, CDMA) networks. A terminal device that accesses an untrusted non-3GPP access network needs to interconnect with the 3GPP core network through a security tunnel set up between the terminal device and a security gateway. The security gateway may be, for example, an evolved packet data gateway (evolved packet data gateway, ePDG) or a non-third generation partnership project (3rd generation partnership project, 3GPP) interworking function (non-3GPP interworking function, N3IWF) network element.

In addition, for brevity of description, in a subsequent description, words "network elements" in function network elements are removed. For example, the AMF network element is briefly referred to as an AMF, and the UDM network element is briefly referred to as a UDM. Other network elements are similar, and are not enumerated one by one.

FIG. 1 is a schematic diagram of a communication network architecture based on a service-based architecture. In FIG. 1, any two network elements of an NEF, an NRF, a PCF, a UDM, an AUSF, a UDR, an AMF, and an SMF may communicate with each other in a service-based communication manner. For example, an interface Nnef or Nausf used for communication between the NEF and the AUSF is a service-based interface. Similarly, interfaces Nnrf, Npcf, Nudm, Naf, Nudr, Namf, and Nsmf are all service-based interfaces. In addition, the AMF may communicate with a terminal device through an N1 interface, the AMF may communicate with a (R)AN through an N2 interface, the RAN may communicate with a UPF through an N3 interface, the SMF may communicate with the UPF through an N4 interface, the terminal device communicates with the RAN through an air interface, and the UPF may communicate with a DN through an N6 interface.

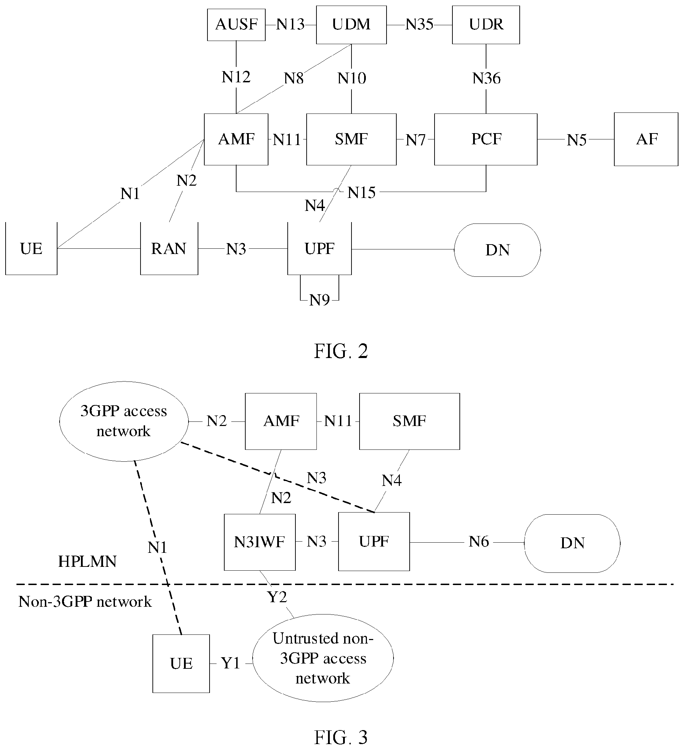

FIG. 2 is a schematic diagram of a communication network architecture based on a point-to-point interface. A main difference between FIG. 1 and FIG. 2 lies in that an interface between network elements in FIG. 2 is a point-to-point interface rather than a service-based interface.

The communication network architectures shown in FIG. 1 and FIG. 2 are 3rd generation partnership project (3rd generation partnership project, 3GPP) system architectures. FIG. 3 shows a non-3GPP (non-3GPP) system architecture. In comparison with the 3GPP architecture, an N3IWF network element is added in the non-3GPP system architecture. In FIG. 3, an example in which a 3GPP core network is a home public land mobile network (home public land mobile network, HPLMN) of UE is used. The UE may access the 3GPP core network through at least one of a 3GPP access network (for example, a RAN) and an untrusted non-3GPP access network.

Currently, a private network and a public network need to be deployed in industrial scenarios. Currently, any one of the following deployment modes may be used for the private network and the public network:
(1) The private network is completely independently deployed. In this deployment mode, a radio access network (radio access network, RAN) device and core network devices (including a control plane network element and a user plane network element) that are completely independent of the public network are deployed in the private network. The private network may communicate with the public network through a firewall.
   For example, the control plane network element may include an AMF, or may further include an SMF. The user plane network element may include a UPF.
(2) A RAN device is shared between the private network and the public network. In this deployment mode, the private network and the public network share a same RAN device, and core network devices (including a control plane network element and a user plane network element) that are independent of the public network are deployed in the private network.
(3) The private network and the public network share a RAN device and a control plane network element of a core network. In this deployment, the private network and the public network share a same RAN device and a same control plane network element of the core network, but the private network has an independent user plane network element.
(4) The private network and the public network share a RAN device and core network devices (including a control plane network element and a user plane network element). In this deployment, the private network and the public network share a same RAN device and a same core network device. In this case, private network isolation depends on a slice or closed access group (closed access group, CAG) feature of the public network.

To reduce deployment costs in an industrial scenario, the deployment mode in (3) or (4) is usually used. However, in this deployment architecture in which a RAN and a core network device (or a core network control plane) are shared, derivation of an air interface user plane key of the private network depends on a root key of the public network. In an example, the AMF of the public network derives, based on a root key Kamf of the public network, an intermediate key, for example, Kgnb, used to derive an air interface control plane key and the air interface user plane key. Then, the AMF sends Kgnb to an access network device, and the access network device further derives the air interface user plane key and the air interface control plane key based on Kgnb. Based on this, the air interface user plane key used in the private network depends on the root key Kamf of the public network, and the root key is exposed in the public network. As a result, security of a private network service cannot be ensured.

In view of this, an embodiment of this application provides a communication solution. An air interface user plane key of a private network is derived by using a root key of the private network, and a network element of the private network performs an operation of deriving an intermediate key based on the root key of the private network. The network element of the private network is not shared with a public network, and derivation of the air interface user plane key no longer depends on a root key of the public network. This can implement security isolation between a user plane of the private network and the public network, ensure security of a manner of deriving a security parameter, and ensure security of the root key of the private network. Further, when the air interface user plane key is used to securely transmit service data, security of service data transmission over an air interface can be improved.

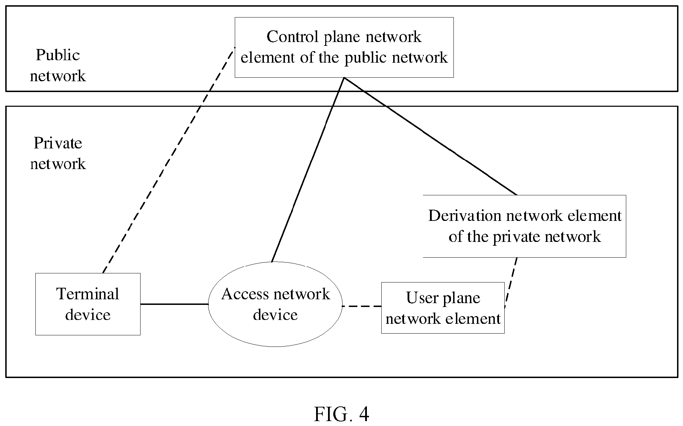

The solutions provided in embodiments of this application are described below in detail with reference to the accompanying drawings. In embodiments of this application, a network element configured to derive an air interface user plane key of a private network is referred to as a derivation network element of the private network, or is briefly referred to as a network element of the private network. In a subsequent description, an example in which a network element configured to derive an air interface user plane key of a private network is referred to as a derivation network element of the private network is used. The network element of the private network in embodiments of this application may be a network element deployed in the private network, a network element deployed by a private network operator, or a network element used for private network control or a private network service. FIG. 4 is a schematic diagram of a possible communication system architecture. A communication system includes a terminal device, a derivation network element of a private network, an access network device that provides an access service for the terminal device, and a network element of a public network. The terminal device sets up a control plane connection to the network element of the public network. In embodiments of this application, the network element of the public network that sets up the control plane connection to the terminal device may also be referred to as a control plane network element of the public network. The control plane network element of the public network in embodiments of this application may be a control plane network element deployed in the public network, a control plane network element deployed by a public network operator, or a control plane network element used for public network control.

In this application, a first security parameter used to derive an air interface user plane key and a second security parameter used to derive an air interface control plane key are generated by different network elements. A network element of the first security parameter used to derive the air interface user plane key is the derivation network element of the private network, and a network element of the second security parameter used by a user to derive the air interface control plane key is the control plane network element of the public network. A root key used to generate the first security parameter is located in the private network, and a root key used to generate the second security parameter is located outside the private network, so that an air interface user plane of the private network is completely isolated from the public network. In this way, security of user plane service transmission is improved. In an optional implementation, in embodiments of this application, the air interface control plane key may alternatively be derived by using the first security parameter.

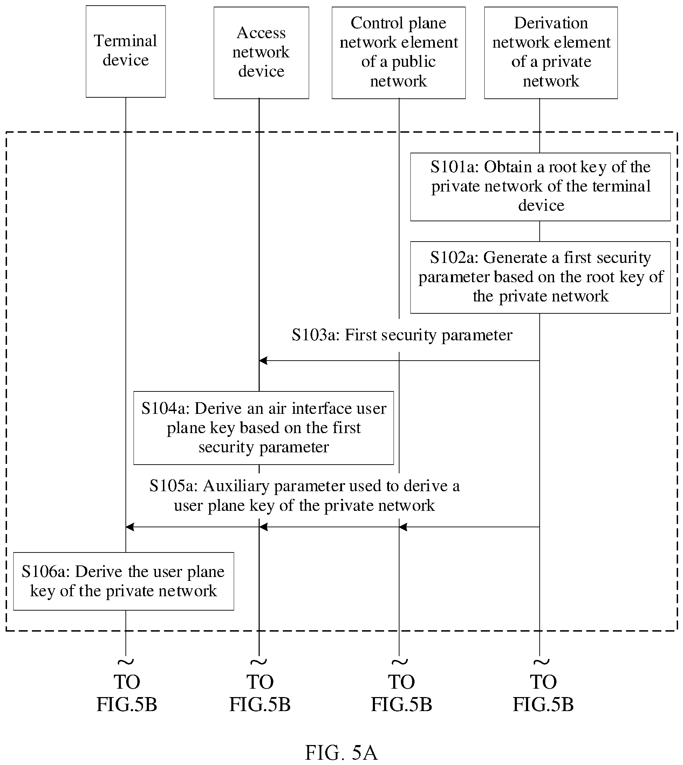

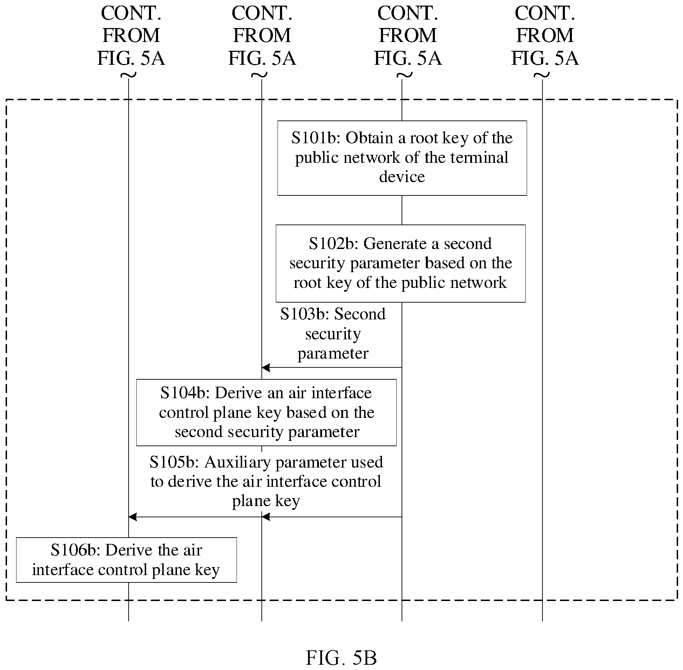

Based on the communication system architecture shown in FIG. 4, FIG. 5A and FIG. 5B are a schematic flowchart of a security parameter obtaining method according to an embodiment of this application.

S101a: The derivation network element of the private network obtains a root key of the private network of the terminal device.

In this embodiment of this application, the derivation network element of the private network may be a session management network element of the private network, or may be an authentication network element of the private network.

For example, the root key of the private network may be a master session key (master session key, MSK) or an extended master session key (extended master session key, EMSK). The root key of the private network may alternatively be an access security entity key (access security management entity key, Kasme).

In a possible implementation, when the derivation network element of the private network is the session management network element of the private network, the session management network element of the private network may obtain the root key of the private network of the terminal device in any one of manners in the following examples.

In an example, the session management network element of the private network may obtain the root key of the private network from local configuration information.

The root key of the private network may be at a terminal device granularity or may be at a service granularity.

For example, the root key of the private network may be at the terminal device granularity, and the session management network element of the private network may obtain the root key of the private network from the local configuration information based on an identifier of the terminal device. The local configuration information may include a correspondence between the identifier of the terminal device and the root key of the private network.

The identifier of the terminal device is used to identify the terminal device, and may be, for example, a subscription permanent identifier (subscription permanent identifier, SUPI), a generic public subscription identifier (generic public subscription identifier, GPSI), or a subscription concealed identifier (subscription concealed identifier, SUPI).

For another example, the root key of the private network may be at the service granularity, and the session management network element of the private network may obtain the root key of the private network from the local configuration information based on a service identifier of the terminal device. The local configuration information may include a correspondence between the service identifier and the root key of the private network.

The service identifier is used to identify a service of the terminal device, and may include, for example, one or more of a data network name (data network name, DNN), a quintet, or other information that can identify a specified service.

For still another example, different terminal devices may use different root keys of the private network when processing different services. The session management network element of the private network may obtain the root key of the private network from the local configuration information based on an identifier of the terminal device and a service identifier of the terminal device. The local configuration information may include a correspondence between the identifier of the terminal device, the service identifier of the terminal device, and the root key of the private network.

In another example, the session management network element of the private network may obtain the root key of the private network from an authentication network element. The root key of the private network may be at a terminal device granularity or may be at a service granularity. The authentication network element may be an authentication network element of the public network or the authentication network element of the private network.

For example, the root key of the private network is at the terminal device granularity, the session management network element of the private network may obtain the root key of the private network from the authentication network element based on an identifier of the terminal device, and the authentication network element stores a correspondence between the identifier of the terminal device and the root key of the private network.

For another example, the root key of the private network is at the service granularity, the session management network element of the private network may obtain the root key of the private network from the authentication network element based on a service identifier of the terminal device, and the authentication network element stores a correspondence between the service identifier and the root key of the private network.

For still another example, different terminal devices may use different root keys of the private network when processing different services. The session management network element of the private network may obtain the root key of the private network from the authentication network element based on an identifier of the terminal device and a service identifier of the terminal device. The authentication network element stores a correspondence between the identifier of the terminal device, the service identifier of the terminal device, and the root key of the private network.

In another possible implementation, the derivation network element of the private network is the authentication network element of the private network, and the authentication network element of the private network may obtain the root key of the private network of the terminal device in any one of manners in the following examples.

In an example, the authentication network element of the private network may obtain the root key of the private network from local configuration information of the authentication network element of the private network.

The root key of the private network may be at a terminal device granularity or may be at a service granularity.

For example, the root key of the private network may be at the terminal device granularity, and the authentication network element of the private network may obtain the root key of the private network from the local configuration information based on an identifier of the terminal device. The local configuration information may include a correspondence between the identifier of the terminal device and the root key of the private network.

For another example, the root key of the private network may be at the service granularity, and the authentication network element of the private network may obtain the root key of the private network from the local configuration information based on a service identifier of the terminal device. The local configuration information may include a correspondence between the service identifier of the terminal device and the root key of the private network.

For still another example, different terminal devices may use different root keys of the private network when processing different services. The authentication network element of the private network may obtain the root key of the private network from the local configuration information based on an identifier of the terminal device and a service identifier of the terminal device. The local configuration information may include a correspondence between the identifier of the terminal device, the service identifier of the terminal device, and the root key of the private network.

In another example, the authentication network element of the private network may alternatively obtain the root key of the private network from user subscription data. That the authentication network element of the private network obtains the root key of the private network from the user subscription data is similar to that the session management network element of the private network obtains the root key of the private network from the user subscription data. For details, refer to the related description about that the session management network element of the private network obtains the root key of the private network from the user subscription data. Details are not described herein again.

S 102a: The derivation network element of the private network generates a first security parameter based on the root key of the private network, where the first security parameter is used to derive an air interface user plane key of the terminal device.

For example, the first security parameter may be included in a session security context. The first security parameter includes an intermediate key used to generate the air interface user plane key.

The derivation network element of the private network may specifically perform S 102a in the following manner.

The derivation network element of the private network may generate the first security parameter based on the root key of the private network and an auxiliary parameter. The first security parameter includes the intermediate key. The intermediate key in this embodiment of this application is a key generated after the root key is derived for one or more times. After receiving the intermediate key, the network element may further perform key derivation, and finally obtain a key used for integrity protection and/or encryption. For example, the access network device derives, by using the intermediate key, a key used for air interface user plane integrity protection and/or encryption. For example, in a 4G communication system, the intermediate key may be k_{eNodeB}.

For example, the intermediate key may also be referred to as Kₙₚₙ.

It may be understood that, that the derivation network element of the private network generates the first security parameter based on the root key of the private network and an auxiliary parameter may include: deriving the intermediate key based on the root key of the private network and the auxiliary parameter.

In an example, the air interface user plane key may include *K_{UPenc}* and/or *Kᵤₚᵢₙₜ. K_{UPenc}* is used to protect a user plane service by using an encryption algorithm. *K_{UPint}* is used to protect the user plane service by using a specific integrity algorithm.

For example, the auxiliary parameter may include one or more of S-NSSAI, a DNN, or a downlink NAS message count (downlink NAS count, DLNAS Count), or may be another preset auxiliary parameter. The DL NAS Count may be sent by the control plane network element of the public network to the derivation network element of the private network.

S103a: The derivation network element of the private network sends the first security parameter to the access network device that provides the access service for the terminal device.

Optionally, the derivation network element of the private network further sends the auxiliary parameter to the access network device.

S104a: The access network device derives the air interface user plane key based on the first security parameter.

S105a: The derivation network element of the private network sends the auxiliary parameter to the terminal device, where the auxiliary parameter is used by the terminal device to derive the intermediate key for generating the air interface user plane key. In an example, the derivation network element of the private network may send the auxiliary parameter to a mobility management network element, and the mobility management network element sends the auxiliary parameter to the terminal device. For example, the mobility management network element sends the auxiliary parameter to the terminal device through an N1 interface. In another example, the derivation network element of the private network may send the auxiliary parameter to a mobility management network element, the mobility management network element sends the auxiliary parameter to the access network device, and the access network device sends the auxiliary parameter to the terminal device. For example, the access network device may send the auxiliary parameter to the terminal device by using an RRC connection reconfiguration message.

S106a: The terminal device generates the intermediate key based on the root key of the private network and the auxiliary parameter, and derives the air interface user plane key based on the intermediate key.

It should be noted that a sequence of performing S105a and S103a is not limited in this application.

In an example, the terminal device stores the root key of the private network. In another example, the terminal device may alternatively obtain the root key of the private network in an online subscription manner. For example, the terminal device may temporarily access a cellular network, and obtain the root key from the private network (for example, the derivation network element of the private network or the authentication network element of the private network) through a control plane or user plane channel of the cellular network that is temporarily accessed; or the terminal device obtains the root key from the private network through a user plane connection set up by a non-3GPP network (for example, a Wi-Fi network).

In this embodiment of this application, after both the access network device and the terminal device complete derivation of the air interface user plane key, during uplink and downlink service data transmission, encryption and decryption may be performed on service data by using the air interface user plane key. When the terminal device is to send uplink service data to the access network device, the terminal device may perform encryption on the uplink service data by using the air interface user plane key, and then send encrypted uplink service data to the access network device, so that security of the uplink service data is protected by using the air interface user plane key over an air interface. When the access network device is to send downlink service data to the terminal device, the access network device may perform encryption on the downlink service data by using the air interface user plane key, and then send encrypted downlink service data to the terminal device, so that security of the downlink service data is protected by using the air interface user plane key over the air interface.

In an example, the following describes a procedure of deriving an air interface control plane key, as shown in FIG. 5A and FIG. 5B.

S101b: The control plane network element of the public network obtains a root key of the public network of the terminal device.

S102b: The control plane network element of the public network generates a second security parameter based on the root key of the public network, where the second security parameter is used to derive an air interface control plane key of the terminal device.

S103b: The control plane network element of the public network sends the second security parameter to the access network device.

S104b: The access network device derives the air interface control plane key based on the second security parameter.

S105b: The control plane network element of the public network sends, to the terminal device, an auxiliary parameter used to derive the air interface control plane key. In an example, the control plane network element of the public network may send, to the terminal device through the N1 interface, the auxiliary parameter used to derive the air interface control plane key. In another example, the control plane network element of the public network may send the auxiliary parameter to the access network device, and the access network device sends, to the terminal device, the auxiliary parameter used to derive the air interface control plane key. For example, the access network device may send, to the terminal device by using an RRC connection reconfiguration message, the auxiliary parameter used to derive the air interface control plane key.

In this embodiment of this application, the auxiliary parameter used to derive the air interface user plane key may be the same as or different from the auxiliary parameter used to derive the air interface control plane key. This is not limited in this embodiment of this application.

S 106b: The terminal device generates an intermediate key based on the root key of the public network and the auxiliary parameter, and derives the air interface control plane key based on the intermediate key.

A sequence of performing S101a and S101b is not specifically limited in this application. S101a may be performed before S101b, or S101a may be performed after S101b.

It should be noted that a sequence of performing S105b and S103b is not limited in this application.

In an optional implementation, in S104a, the access network device may alternatively derive the air interface control plane key based on the first security parameter. In S105a, the auxiliary parameter may be further used by the terminal device to derive the intermediate key for generating the air interface control plane key. In S106a, the terminal device may alternatively generate the intermediate key based on the root key of the private network and the auxiliary parameter, and then derive the air interface control plane key by using the intermediate key. In this case, S104b to S106b may not be performed.

It should be noted that the control plane network element of the public network may still send, to the terminal device, an auxiliary parameter used to derive a NAS control plane key. The terminal device generates an intermediate key by using the root key of the public network and the auxiliary parameter, and derives the NAS control plane key based on the intermediate key.

In the foregoing solution provided in this application, the security parameters used to derive the air interface control plane key and the air interface user plane key are separately generated. To be specific, the network element of the public network generates the security parameter used to derive the air interface control plane key, and the network element of the private network generates the security parameter used to derive the air interface user plane key. Because the network element of the private network is not shared with the public network, security of a manner for deriving the security parameter can be ensured. In addition, the security parameter used to derive the air interface user plane key is generated by using the root key of the private network. Because the root key of the private network is stored in the private network, it can be ensured that the root key of the private network is not known to the public network, to ensure security of the root key of the private network. Further, when the air interface user plane key is used to securely transmit service data, security of service data transmission over an air interface is improved.

In some embodiments of this application, step S103a in which the derivation network element of the private network sends the first security parameter to the access network device may be implemented in any one of the following possible manners.

In a first possible implementation, the derivation network element of the private network may send the first security parameter to the access network device through the control plane network element of the public network. For example, the control plane network element of the public network may include a mobility management network element of the public network.

In a second possible implementation, the derivation network element of the private network may send the first security parameter to the access network device through a user plane network element of the private network. For example, the user plane network element of the private network may include a UPF of the private network.

In a possible implementation, to improve security of the first security parameter, regardless of whether the derivation network element of the private network forwards the first security parameter to the access network device through the control plane network element of the public network or forwards the first security parameter to the access network device through the user plane network element of the private network, the derivation network element of the private network may perform encryption on the first security parameter, and then send an encrypted first security parameter to the access network device through the control plane network element of the public network or the user plane network element of the private network. After receiving the encrypted first security parameter, the access network device may obtain the first security parameter by preforming decryption by using a decryption key. For example, the decryption key may be a symmetric key of an encryption key.

A key used to encrypt the first security parameter may be referred to as a security parameter key, or may be referred to as a tunnel key, or may have another name. This is not specifically limited in this application. For example, the decryption key may be the symmetric key of the encryption key, and the decryption key may also be a security parameter key.

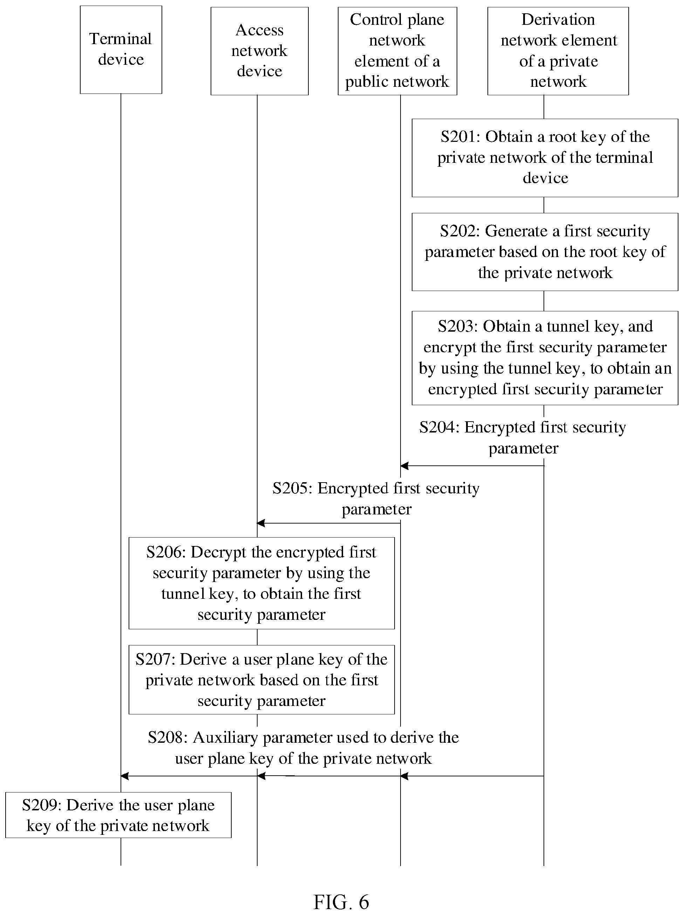

As shown in FIG. 6, an example in which the key used to encrypt the first security parameter is referred to as a tunnel key is used to describe a security parameter obtaining method provided in an embodiment of this application.

For S201 and S202, refer to S101a and S102a. Details are not described herein again.

S203: The derivation network element of the private network obtains a tunnel key, and encrypts the first security parameter by using the tunnel key, to obtain an encrypted first security parameter.

For example, the derivation network element of the private network is a session management network element of the private network, and the tunnel key may be included in local configuration information of the session management network element of the private network, so that the session management network element of the private network may obtain the tunnel key from the local configuration information. Optionally, the derivation network element of the private network may obtain the tunnel key from the local configuration information based on one or more of an identifier of a RAN device, a DNN, or S-NSSAI. Alternatively, the tunnel key is stored on an authentication network element of the private network, and the session management network element of the private network may obtain the tunnel key from the authentication network element of the private network. The session management network element of the private network may obtain the tunnel key from the authentication network element of the private network based on one or more of the identifier of the RAN device, the DNN, or the S-NSSAI.

For another example, the derivation network element of the private network is an authentication network element of the private network, and the tunnel key may be included in local configuration information of the authentication network element of the private network. The authentication network element of the private network may obtain the tunnel key from the local configuration information based on one or more of an identifier of a RAN device, a DNN, or S-NSSAI.

S204: The derivation network element of the private network sends the encrypted first security parameter to a control plane network element of the public network/a user plane network element of the private network. The control plane network element of the public network/the user plane network element of the private network receives the encrypted first security parameter.

For example, when the derivation network element of the private network is the session management network element of the private network, the control plane network element of the public network may include a mobility management network element of the public network, and the session management network element of the private network may send the first security parameter to the access network device through the mobility management network element of the public network.

For another example, the derivation network element of the private network is the authentication network element of the private network, and the control plane network element of the public network may include a mobility management network element of the public network and a session management network element of the public network. The authentication network element of the private network sends the first security parameter to the access network device through the session management network element of the public network and the mobility management network element of the public network.

S205: The control plane network element of the public network sends the encrypted first security parameter to the access network device.

Optionally, the derivation network element of the private network further sends an auxiliary parameter to the access network device.

S206: The access network device decrypts the encrypted first security parameter by using the tunnel key, to obtain the first security parameter.

For example, the tunnel key may be configured on the access network device.

In an example, the RAN device is preconfigured with one tunnel key. The tunnel key may be at a RAN granularity, a DNN granularity, or an S-NSSAI granularity.

In another example, the RAN device is configured with a plurality of tunnel keys, and there is a mapping relationship between the tunnel keys and DNNs or pieces of S-NSSAI, so that the RAN device may determine, from the plurality of locally configured tunnel keys based on the DNNs or the pieces of S-NSSAI, a tunnel key used to decrypt the first security parameter.

For S207 to S209, refer to S104a to S106a. Details are not described herein again.

In the foregoing solution, in a process of transmitting the first security parameter used to derive the air interface user plane key, encryption is performed by using the tunnel key. Transmission of the first security parameter is not transparent to another network element, so that the another network element is prevented from directly obtaining the first security parameter. In this way, security of service data transmission over an air interface can be further improved.

In another possible implementation, the derivation network element of the private network and the access network device may set up a security tunnel, and then the derivation network element of the private network sends the first security parameter to the access network device through the security tunnel. On the security tunnel between the derivation network element of the private network and the access network device, the control plane network element of the public network, the user plane network element of the private network, or the user plane network element of the private network and a data network may be used as a forwarding network element.

Optionally, setup of the security tunnel may be triggered by the derivation network element of the private network or triggered by the access network device.

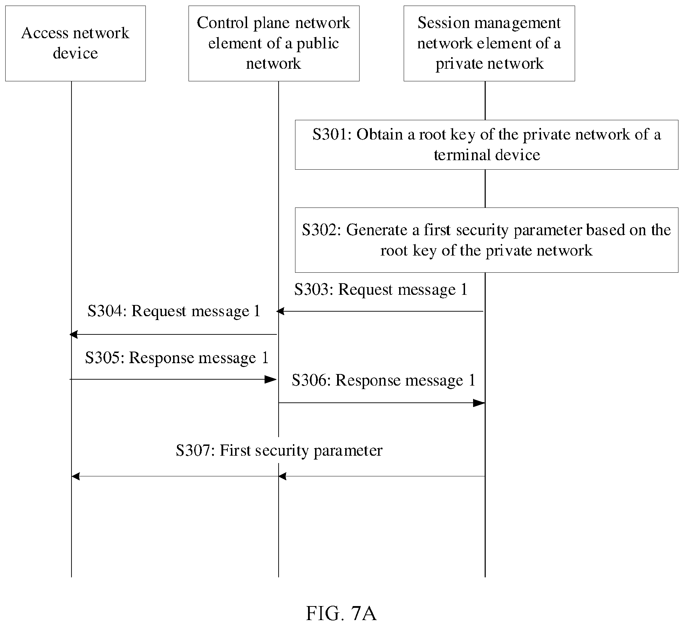

In an example, FIG. 7A is a schematic flowchart of a security parameter obtaining method according to an embodiment of this application. In FIG. 7A, an example in which a derivation network element of a private network is a session management network element of the private network is used. Setup of a security tunnel is triggered by the derivation network element of the private network, and a control plane network element of a public network on the security tunnel is used as a forwarding network element.

For S301 and S302, refer to S101a and S102a. Details are not described herein again.

S303: The session management network element of the private network requests to set up a security tunnel to an access network device. The session management network element of the private network sends a request message 1 to the control plane network element of the public network, where the request message 1 is used to request to set up the security tunnel to the access network device. In an example, the security tunnel may be an IPsec tunnel.

For example, the request message 1 may be included in a security message container. For example, the security message container may be an IPsec message container. The request message 1 may be sent to the control plane network element of the public network by using an N11 message. Information to be subsequently transmitted through the security tunnel may be carried in the security message container. For example, a first security parameter to be sent by the session management network element of the private network to the access network device is carried in the security message container.

Optionally, the session management network element of the private network may further send an indication 1 (Indication 1) to the control plane network element of the public network, where the indication 1 indicates the control plane network element of the public network to forward the request message 1 to the access network device. Both the indication 1 and the request message 1 may be included in the N11 message and sent to the control plane network element of the public network.

For example, the control plane network element of the public network includes a mobility management network element of the public network, and the N11 message may be a service-based interface message Namf_Communication_N1N2MessageTransfer, or may be another newly defined N11 message. This is not specifically limited in this application.

S304: After receiving the request message 1, the control plane network element of the public network forwards the request message 1 to the access network device.

For example, the control plane network element of the public network may include the request message 1 in an N2 message and send the N2 message to the access network device. For example, the N2 message may be a PDU session resource setup request message (PDU session resource setup request), or may be another newly defined N2 message. This is not specifically limited in this application.

Optionally, the N2 message may further include an indication 2, and the indication 2 indicates that the N2 message includes the request message 1 from the session management network element of the private network.

Optionally, the control plane network element of the public network forwards the request message 1 to the access network device based on the indication 1.

After receiving the request message 1, the access network device sends, to the session management network element of the private network through the control plane network element of the public network, a response message 1 used to respond to the request message 1.

S305: The access network device sends the response message 1 to the control plane network element of the public network.

For example, the response message 1 may be included in an N2 interface message between the access network device and the session management network element of the private network.

S306: The control plane network element of the public network forwards the response message 1 to the session management network element of the private network.

It should be understood that, in a process of setting up a security tunnel, the control plane network element of the public network and the access network device negotiate an encryption key used for the security tunnel, to subsequently transmit the first security parameter in an encryption manner. The control plane network element of the public network and the access network device may negotiate, through one or more interactions, the encryption key used for the security tunnel, to complete setup of the security tunnel. For example, the control plane network element of the public network and the access network device may set up the security tunnel by using an N11 interface message and an N2 interface message, and negotiate the encryption key used for the security tunnel. FIG. 7A shows only one interaction process, and another interaction process may be further included. This is not limited in embodiments of this application.

It should be noted that the encryption key for the security tunnel may be used to encrypt information transmitted in the security message container, or the encryption key for the security tunnel may be used to encrypt the security message container that carries information. It may be understood that encrypting the security message container also means encrypting the information transmitted in the security message container.

S307: The session management network element of the private network sends the first security parameter to the access network device through the security tunnel, and the access network device receives the first security parameter from the session management network element of the private network through the security tunnel.

The session management network element of the private network sends the first security parameter to the access network device through the security tunnel. In an example, the session management network element of the private network sends the first security parameter to the access network device by using the security message container. In another example, the session management network element of the private network includes the first security parameter in the security message container and sends the security message container to the access network device.

In an example, after the session management network element of the private network and the access network device complete setup of the security tunnel, the session management network element of the private network may actively send the first security parameter to the access network device through the security tunnel.

In another example, after the session management network element of the private network and the access network element complete setup of the security tunnel, the access network device may request to obtain the first security parameter from the session management network element of the private network. For example, the access network device sends an obtaining request to the session management network element of the private network, where the obtaining request is used to request to obtain the first security parameter. In this case, after receiving the obtaining request, the session management network element of the private network sends the first security parameter to the access network device through the security tunnel.

Optionally, the derivation network element of the private network further sends an auxiliary parameter to the access network device through the security tunnel.

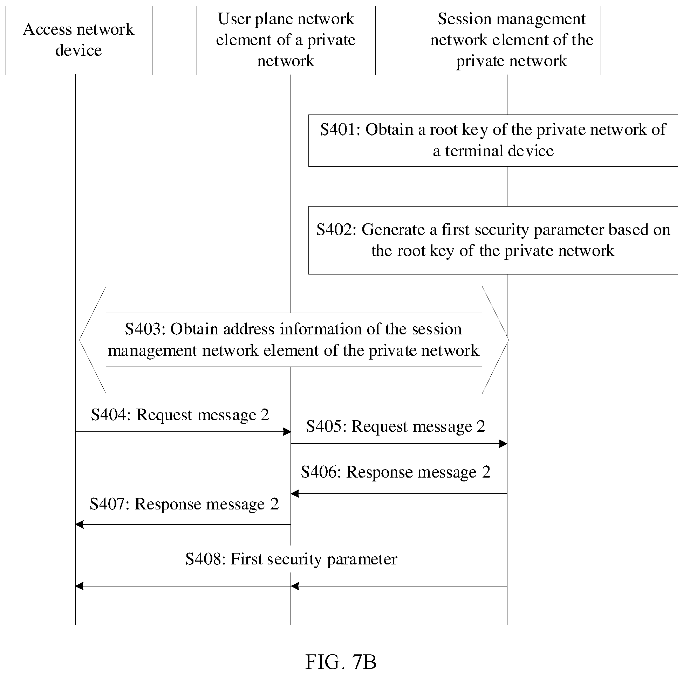

In another example, FIG. 7B is a schematic flowchart of another security parameter obtaining method according to an embodiment of this application. In FIG. 7B, an example in which a derivation network element of a private network is a session management network element of the private network is used. Setup of a first security tunnel is triggered by an access network device, and a user plane network element of the private network on the security tunnel is used as a forwarding network element.

When the access network device is to trigger setup of the security tunnel, the access network device may obtain address information of the session management network element of the private network in advance, and then trigger setup of the security tunnel to the session management network element of the private network based on the address information of the session management network element of the private network.

For example, the access network device obtains the address information of the session management network element of the private network in a session setup or modification procedure. The access network device may obtain an IP address and a port number of the session management network element of the private network in the session setup or modification procedure.

For S401 and S402, refer to S101a and S102a. Details are not described herein again.

S403: The access network device obtains the address information of the session management network element of the private network. The address information of the session management network element of the private network may include an IP address and/or a port number of the derivation network element of the private network.

For example, the access network device obtains the address information of the session management network element of the private network in the session setup or modification procedure.

The access network device requests, based on the address information of the session management network element of the private network, to set up the security tunnel to the session management network element of the private network. For example, S404 may be performed.

S404: The access network device sends a request message 2 to the user plane network element of the private network, where the request message 2 is used to request to set up the security tunnel to the session management network element of the private network. For example, the request message 2 may be encapsulated in a format of an IP packet and sent to the user plane network element of the private network. A destination IP address of the IP packet is the IP address of the session management network element of the private network.

S405: The user plane network element of the private network forwards the request message 2 to the session management network element of the private network.

For example, after receiving the request message 2, the user plane network element of the private network forwards the request message 2 to the session management network element of the private network based on the destination IP address of the IP packet.

In a first example, the user plane network element of the private network obtains a forwarding rule, where the forwarding rule indicates that a next hop corresponding to the address information of the session management network element of the private network is the session management network element of the private network.

In an example, the user plane network element of the private network may obtain the forwarding rule from the session management network element of the private network, or the user plane network element of the private network is locally configured with the forwarding rule. That the user plane network element of the private network obtains the forwarding rule from the session management network element of the private network may be: The session management network element of the private network may actively send the forwarding rule to the user plane network element of the private network; or the user plane network element of the private network may request the forwarding rule from the session management network element of the private network, and then the session management network element of the private network sends the forwarding rule to the user plane network element of the private network based on the request.

In a second example, the user plane network element of the private network sends the request message 2 to a data network based on the destination IP address of the IP packet; and a network device in the data network performs addressing based on the IP address of the session management network element of the private network, and sends the request message 2 to the session management network element of the private network.

S406: The session management network element of the private network sends a response message 2 to the user plane network element of the private network.

In the first example, the session management network element of the private network may directly send the response message 2 to the user plane network element of the private network.

In the second example, the session management network element of the private network sends the response message 2 to the user plane network element of the private network through the data network.

S407: The user plane network element of the private network forwards the response message 2 to the access network device.

It should be understood that, in a process of setting up the security tunnel, the access network device and the session management network element of the private network negotiate an encryption key used for the security tunnel, to subsequently transmit a first security parameter in an encryption manner. The access network device and the session management network element of the private network may negotiate, through one or more interactions, the encryption key used for the security tunnel, to complete setup of the security tunnel. FIG. 7B shows only one interaction process, and another interaction process may be further included. This is not limited in embodiments of this application.

S408: The session management network element of the private network sends the first security parameter to the access network device through the security tunnel, and the access network device receives the first security parameter from the session management network element of the private network through the security tunnel.

That the session management network element of the private network sends the first security parameter to the access network device through the security tunnel may be understood as that the session management network element of the private network sends the first security parameter to the access network device by using a security message container, or may be understood as that the session management network element of the private network includes the first security parameter in a security message container and sends the security message container to the access network device.

In an example, after the session management network element of the private network and the access network device complete setup of the first security tunnel, the session management network element of the private network may actively send the first security parameter to the access network device through the first security tunnel.

In another example, after the session management network element of the private network and the access network element complete setup of the first security tunnel, the access network device may request to obtain the first security parameter from the session management network element of the private network. For example, the access network device sends an obtaining request to the session management network element of the private network, where the obtaining request is used to request to obtain the first security parameter. In this case, after receiving the obtaining request, the session management network element of the private network sends the first security parameter to the access network device through the first security tunnel.

Optionally, the derivation network element of the private network further sends an auxiliary parameter to the access network device through the security tunnel.

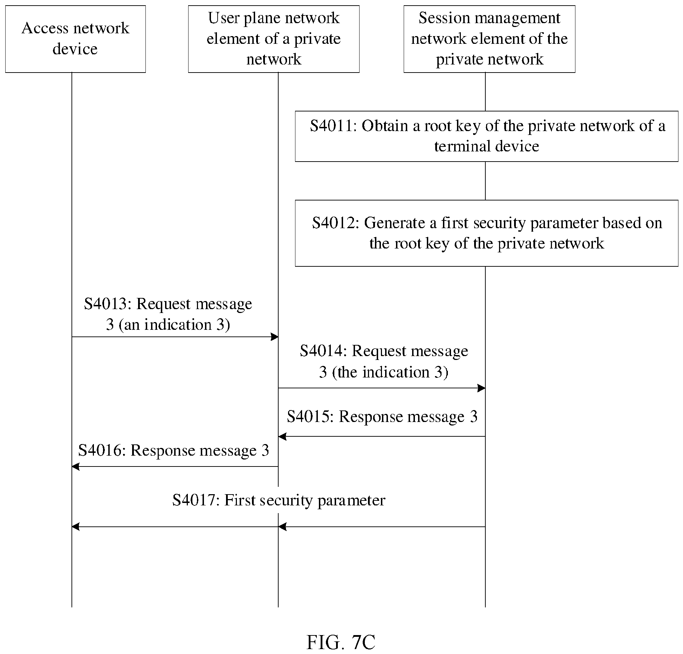

In still another example, FIG. 7C is a schematic flowchart of still another security parameter obtaining method according to an embodiment of this application. In FIG. 7C, an example in which a derivation network element of a private network is a session management network element of the private network is used. Setup of a first security tunnel is triggered by an access network device, and a user plane network element of the private network on the security tunnel is used as a forwarding network element.

For S4011 and S4012, refer to S101a and S102a. Details are not described herein again.

S4013: The access network device sends a request message 3 to the user plane network element of the private network, where the request message 3 is used to request to set up the security tunnel to the session management network element of the private network. For example, the request message 3 may be included in a security message container. For example, the security message container may be an IPsec message container. Information to be subsequently transmitted through the security tunnel may be carried in the security message container. For example, a first security parameter to be sent by the session management network element of the private network to the access network device may be carried in the security message container.

Optionally, the access network device may further send an indication 3 (Indication 3) to the user plane network element of the private network, where the indication 3 indicates the user plane network element of the private network to forward the request message 3 to the access network device. For example, both the indication 3 and the request message 3 may be included in an N3 message and sent to the user plane network element of the private network.

S4014: The user plane network element of the private network forwards the request message 3 to the session management network element of the private network.

Optionally, the user plane network element of the private network forwards the request message 3 to the session management network element of the private network based on the indication 3.

S4015: The session management network element of the private network sends a response message 3 to the user plane network element of the private network.

S4016: The user plane network element of the private network forwards the response message 3 to the access network device.

It should be understood that, in a process of setting up the security tunnel, the access network device and the session management network element of the private network negotiate an encryption key used for the security tunnel, to subsequently transmit the first security parameter in an encryption manner. The access network device and the session management network element of the private network may negotiate, through one or more interactions, the encryption key used for the security tunnel, to complete setup of the security tunnel. FIG. 7B shows only one interaction process, and another interaction process may be further included. This is not limited in embodiments of this application.

For S4017, refer to S408. Details are not described herein again.

In some embodiments of this application, in a session setup or modification procedure of the terminal device, when the derivation network element of the private network determines that the first security parameter required for generating the air interface user plane key needs to be derived based on the root key of the private network, the derivation network element of the private network may perform S101a. In some other embodiments of this application, when the terminal device triggers a private network service, and the derivation network element of the private network determines that the first security parameter required for generating the air interface user plane key needs to be derived based on the root key of the private network, the derivation network element of the private network may perform S101a.

In a possible implementation, the derivation network element of the private network is the session management network element of the private network. The derivation network element of the private network may obtain first parameter information in the session setup or modification procedure of the terminal device, where the first parameter information may be used to determine to generate the first security parameter by using the root key of the private network. The derivation network element of the private network obtains the root key of the private network based on the first parameter information. For example, the derivation network element of the private network determines, based on the first parameter information, to generate the first security parameter by using the root key of the private network, and then obtains the root key of the private network.

In an example, the first parameter information may include first indication information. The first indication information indicates to generate the first security parameter by using the root key of the private network, or the first indication information indicates to generate, by using the root key of the private network, the first security parameter used to derive the air interface user plane key.

For example, the first indication information may be referred to as a local credential derivative (local credential derivative, LCDR) indication. The LCDR indicates to generate the first security parameter by using the root key of the private network.

Optionally, the derivation network element of the private network further obtains second parameter information, where the second parameter information indicates that the air interface control plane key and the air interface user plane key of the terminal device are separated from each other. The second parameter information may be referred to as a user plane key separation (user plane separation request, UPSR) indication. The UPSR indicates that the air interface control plane key and the air interface user plane key are separated from each other.

In another example, the first parameter information includes one or more of the following: a data network name DNN, an identifier of the terminal device, or a quintet.

The session management network element of the private network may determine, in the following manner based on the first parameter information, to generate the first security parameter by using the root key of the private network:
The session management network element of the private network determines, based on the first parameter information and local configuration information, to generate the first security parameter by using the root key of the private network;
the session management network element of the private network determines, based on the first parameter information and user subscription data of the terminal device, to generate the first security parameter by using the root key of the private network; or
the session management network element of the private network determines, based on the first parameter information, local configuration information, and user subscription data of the terminal device, to generate the first security parameter by using the root key of the private network.

The following describes a procedure in which the derivation network element of the private network obtains the first parameter information in the session setup or modification procedure of the terminal device.

A1: The terminal device sends a first message to the control plane network element of the public network, where the first message is used to request to set up or modify a session of the terminal device. Optionally, the first message may include the first parameter information. The first message may include a PDU session setup request, a PDU session modification request, or the like. For example, the first message may be a NAS message.

A2: The control plane network element of the public network requests the session management network element of the private network to create a session context. For example, the control plane network element of the public network may send a second message to the session management network element of the private network, where the second message is used to request to create the session context, and the second message carries the first parameter information. The second message may be an N11 message.

For example, the N11 message may be implemented by using a service-based interface message Nsmf_PDUSession_CreateSMContext. For example, Nsmf_PDUSession_CreateSMContext carries the first parameter information (for example, including the LCDR), and may further carry the second parameter information (for example, including the UPSR). Nsmf_PDUSession_CreateSMContext may further carry the NSSAI and the DNN, and may further carry identification information of a RAN device. For example, the identification information of the RAN device may include a global radio access network node ID (Global RAN Node ID) and/or a RAN node name (RAN Node Name). For example, the identification information of the RAN device may be used by the session management network element of the private network to select a tunnel key.

A3: The session management network element of the private network determines whether to generate the first security parameter by using the root key of the private network. If determining to generate the first security parameter by using the root key of the private network, the session management network element of the private network obtains the root key of the private network of the terminal device. For details about that the session management network element of the private network obtains the root key of the private network of the terminal device, refer to the description in S101a.

In an example, the session management network element of the private network obtains the user subscription data, and determines, based on the user subscription data, to generate the first security parameter by using the root key of the private network. For example, the session management network element of the private network may obtain the user subscription data from a UDM. Specifically, the session management network element of the private network may obtain the user subscription data of the terminal device from the UDM based on identification information of the terminal device that is included in the first parameter information.

For example, the user subscription data includes information used to indicate to derive, based on the root key of the private network, the first security parameter required for generating the air interface user plane key.

For another example, the user subscription data indicates to derive, for a specified service (for example, a private network service) of a user of the terminal device based on the root key of the private network, the first security parameter required for generating the air interface user plane key. For example, the specified service may be determined based on a service identifier. The service identifier may be the DNN, the quintet, or other information that can identify the specified service, and the service identifier is included in the first parameter information. In an example, the user subscription data may include an association relationship between the service identifier and the information used to indicate to derive, based on the root key of the private network, the first security parameter required for generating the air interface user plane key.

In another example, if the session management network element of the private network receives the LCDR or receives the UPSR and the LCDR in A2, the session management network element of the private network determines to generate the first security parameter by using the root key private network. Otherwise, the session management network element of the private network determines not to generate the first security parameter based on the root key of the private network any longer.

In still another example, the session management network element of the private network determines, based on the first parameter information and the local configuration information, whether to derive, based on the root key of the private network, the first security parameter required for generating the air interface user plane key.

For example, the local configuration information includes a description that the session management network element of the private network derives, by using the root key of the private network for the terminal device indicated by the identifier of the terminal device, the key required by an air interface user plane.

For another example, the local configuration information includes a description that the session management network element of the private network derives, for a specified service based on the root key of the private network, the first security parameter required for generating the air interface user plane key. For example, the specified service may be identified based on a service identifier. The service identifier may be the DNN, the quintet, or other information that can identify the specified service, and the service identifier is included in the first parameter information. In an example, the local configuration information may include an association relationship between the service identifier and the information used to indicate to derive, based on the root key of the private network, the first security parameter required for generating the air interface user plane key.

In an example, the service identifier is the DNN. An L-SMF may query the local configuration information based on the DNN, determine that there is an association relationship, in the local configuration information, between the DNN and the information used to indicate to derive, based on the root key of the private network, the first security parameter required for generating the air interface user plane key, and then determine to derive, based on the root key of the private network, the first security parameter required for generating the air interface user plane key.

In another possible implementation, the derivation network element of the private network is the authentication network element of the private network. When the authentication network element of the private network receives, from a session management network element of the public network in the session setup or modification procedure of the terminal device, a request for obtaining a session context, and the authentication network element of the private network determines that the first security parameter required for generating the air interface user plane key needs to be derived based on the root key of the private network, the authentication network element of the private network may perform S101a.

The solutions provided in embodiments of this application are described below in detail with reference to a specific scenario.

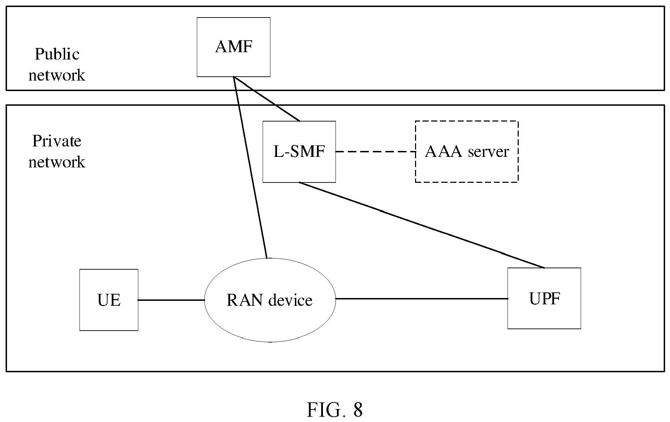

In a possible application scenario, a derivation network element of a private network is an SMF of the private network, and the SMF of the private network is deployed in the private network. A control plane network element of a public network may include an AMF. FIG. 8 is a schematic diagram of a possible communication network deployment architecture. In FIG. 8, an example in which the derivation network element of the private network is the SMF of the private network is used. It should be noted that FIG. 8 is merely an example, and a quantity and types of network elements included in a communication network are not specifically limited. In FIG. 8, the SMF of the private network is referred to as an L-SMF, is responsible for managing setup, modification, and deletion of a private network session, and is responsible for user plane security and the like. In FIG. 8, an authentication network element of the private network is an authentication, authorization, and accounting (authentication, authorization, and accounting, AAA) server. The L-SMF and the AAA server are local (local) control plane (control plane) network elements of the private network. Optionally, the L-SMF and the AAA server may be deployed together in one physical device or physical entity. Alternatively, the L-SMF and the AAA server may be separately deployed. In other words, the L-SMF and the AAA server are two independent physical devices or physical entities. This is not specifically limited in this embodiment of this application.

The AAA server may be configured to store a root key required by a user plane. In another example, the root key of the user plane may alternatively be stored on the L-SMF. The L-SMF deployed in the private network derives a first security parameter (including an intermediate key) based on the root key, and transmits the first security parameter to a RAN through a security tunnel. In one manner, the security tunnel may be L-SMF → AMF → RAN. In another manner, the security tunnel may be L-SMF → UPF → RAN. It should be noted that, on the security tunnel, only the head and the tail can learn transferred content, but an intermediate forwarding network element responsible for forwarding is transparent, and cannot learn of the transferred specific content.

### Example 1:

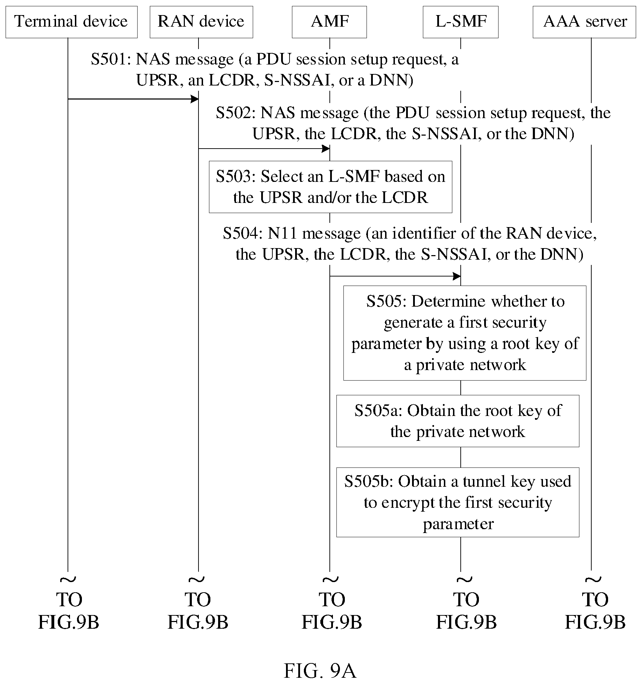

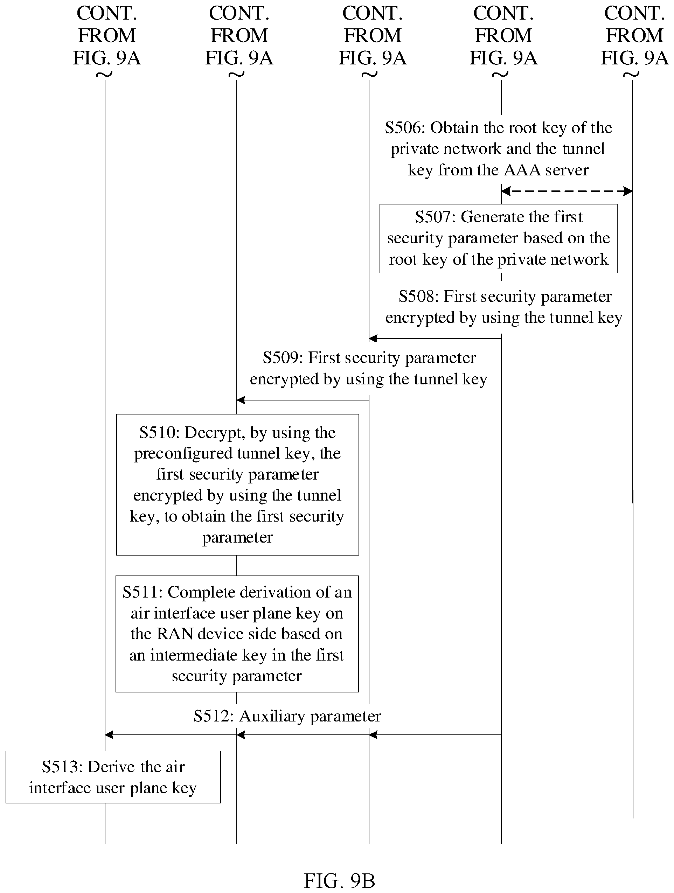

A first security parameter generated for a private network session is protected by using a security parameter key (for example, referred to as a tunnel key in this embodiment). FIG. 9A and FIG. 9B are a schematic flowchart of a possible security parameter obtaining method. In FIG. 9A and FIG. 9B, an example in which a first security parameter is transferred to an access network device and a terminal device in a PDU session setup procedure is used for description.

S501: The terminal device sends a message 1 to a RAN device. For example, the message 1 may be a PDU session setup request. Specifically, the terminal device may send the PDU session setup request to the RAN by using a non-access stratum message (non-access stratum message, NAS message).

The NAS message includes the PDU session setup request. Optionally, an LCDR may be further included, and further, a UPSR may be included.

In an example, the NAS message may further include one or more of single network slice selection assistance information (single network slice selection assistance information, NSSAI) or a data network name (data network name, DNN).

S502: The RAN device receives the NAS message, and forwards the NAS message to an AMF.

S503: When performing an operation of selecting an SMF network element, the AMF network element may select an L-SMF based on the UPSR and/or the LCDR. Specifically, when the operation of selecting the SMF is performed, a selection condition may include one or more of the DNN, the S-NSSAI, location information of the terminal device, or load information. In the application scenario mentioned in embodiments of this application, when the operation of selecting the SMF is performed, the AMF further selects, based on the UPSR and/or the LCDR, the L-SMF deployed in a private network from SMFs that meet the selection condition.

S504: After selecting the L-SMF network element, the AMF network element sends an N11 message to the L-SMF network element, where the N11 message is used to create a session context.

The N11 message may be implemented by using a service-based interface message Nsmf_PDUSession_CreateSMContext. For example, Nsmf_PDUSession_CreateSMContext carries one or more of the NSSAI, the DNN, the UPSR, or the LCDR. Nsmf_PDUSession_CreateSMContext may further carry identification information of the RAN device. For example, the identification information of the RAN device may include a global radio access network node ID (Global RAN Node ID) and/or a RAN node name (RAN Node Name). The identification information of the RAN device is used by the L-SMF to select a tunnel key.

S505: After receiving the N11 message that is used to create the session context and that is sent by the AMF network element, the L-SMF network element determines whether to generate the first security parameter by using a root key of the private network.

It should be noted that S505 is an optional step. In some embodiments, the step of determining whether to generate the first security parameter by using a root key of the private network may not be performed.

In an example, the L-SMF obtains user subscription data, and determines, based on the user subscription data, to derive a key required by a user plane by using the root key of the private network. For example, the L-SMF may obtain the user subscription data from a UDM. Specifically, the L-SMF may obtain user subscription data of the terminal device from the UDM based on identification information of the terminal device.

For example, the user subscription data includes information used to indicate to generate the first security parameter for a user of the terminal device by using the root key of the private network.

For another example, the user subscription data indicates to derive, by using the root key of the private network for a specified service of a user of the terminal device, the key required by the user plane. For example, the specified service may be determined based on a service identifier. The service identifier may be the DNN, a quintet, or other information that can identify the specified service. In an example, the user subscription data may include an association relationship between the service identifier and the information used to indicate to generate the first security parameter by using the root key of the private network.

In another example, if the L-SMF determines that the N11 message carries the LCDR or carries the UPSR and the LCDR, the L-SMF determines to generate the first security parameter by using the root key of the private network. Otherwise, the L-SMF determines not to generate the first security parameter by using the root key of the private network any longer.

In still another example, the L-SMF determines, based on local configuration information, whether to generate the first security parameter by using the root key of the private network.

For example, the local configuration information includes a description that the L-SMF generates the first security parameter by using the root key of the private network.

For another example, the local configuration information includes a description that the L-SMF derives, by using the root key of the private network for a specified service, the key required by the user plane. For example, the specified service may be identified based on a service identifier. The service identifier may be the DNN, a quintet, or other information that can identify the specified service. In an example, the local configuration information may include an association relationship between the service identifier and indication information used to indicate to derive, by using the root key of the private network, the key required by the user plane.

In an example, the service identifier is the DNN. The L-SMF may query the local configuration information based on the DNN, determine that there is an association relationship, in the local configuration information, between the DNN and the information used to indicate to generate the first security parameter based on the root key of the private network, and then determine to generate the first security parameter by using the root key of the private network.

S505a: The L-SMF obtains the root key of the private network.

Optionally, when the L-SMF determines to generate the first security parameter by using the root key of the private network, the L-SMF obtains the root key of the private network. For a specific obtaining manner, refer to the related description in the embodiment corresponding to FIG. 5A and FIG. 5B. Details are not described herein again.

S505b: The L-SMF obtains a tunnel key used to encrypt the first security parameter.

The L-SMF may obtain the tunnel key in, but not limited to, any one of Manners 1 to 3 in the following.

Manner 1: The L-SMF may obtain the tunnel key from the local configuration information based on one or more of an identifier of the RAN device, the DNN, or the S-NSSAI.

In an example, the tunnel key may be obtained from the local configuration information based on one of the foregoing items. For example, the local configuration information includes a mapping relationship between the identifier of the RAN device and the tunnel key. In this way, the L-SMF can determine the tunnel key from the local configuration information based on the identifier of the RAN device. For another example, the local configuration information includes a mapping relationship between the DNN and the tunnel key. In this way, the L-SMF can determine the tunnel key from the local configuration information based on the DNN. For still another example, the local configuration information includes a mapping relationship between the S-NSSAI and the tunnel key. In this way, the L-SMF can determine the tunnel key from the local configuration information based on the S-NSSAI.

In another example, the tunnel key may be determined from the local configuration information based on two of the foregoing items. For example, the local configuration information includes a mapping relationship between the DNN, the identifier of the RAN device, and the tunnel key. In this way, the L-SMF can determine the tunnel key from the local configuration information based on the DNN and the identifier of the RAN device. For another example, the local configuration information includes a mapping relationship between the S-NSSAI, the identifier of the RAN device, and the tunnel key.

In still another example, the local configuration information includes a mapping relationship between the DNN, the identifier of the RAN device, the S-NSSAI, and the tunnel key.

Manner 2: The L-SMF may determine the tunnel key from the user subscription data based on one or more of an identifier of the RAN device, the DNN, or the S-NSSAI. For example, the user subscription data includes a mapping relationship between the identifier of the RAN device and a tunnel identifier. For another example, the user subscription data includes a mapping relationship between the DNN and a tunnel identifier. For still another example, the user subscription data includes a mapping relationship between the S-NSSAI and a tunnel identifier. For still yet another example, the user subscription data includes a mapping relationship between the DNN, the identifier of the RAN device, and the tunnel key. For a further example, the user subscription data includes a mapping relationship between the DNN, the S-NSSAI, and the tunnel key. The user subscription data includes a mapping relationship between the DNN, the identifier of the RAN device, the S-NSSAI, and the tunnel key.

Manner 3: The L-SMF may obtain the tunnel key from an AAA server based on one or more of an identifier of the RAN device, the DNN, and the S-NSSAI.

Optionally, to improve security, the N11 message sent by the AMF to the L-SMF carries an identifier used to indicate an identity of the RAN device. The identifier of the RAN device that is sent by the L-SMF to the AAA server may be obtained through conversion of the identifier indicating the identity of the RAN device. For example, the identifier of the RAN device may be obtained through conversion (for example, anonymization processing) of the Global RAN Node ID and/or the RAN Node Name.

In a possible implementation, when the L-SMF cannot obtain the root key of private network and the tunnel key in Manner 1 or Manner 2, for example, a correspondence between the identifier of the terminal device and the root key of the private network is not stored in the local configuration information or the user subscription data, the L-SMF may request, from the AAA server, the root key of the private network corresponding to the identifier of the terminal device.

In an example, when the L-SMF obtains the root key of the private network in a third manner and obtains the tunnel key in Manner 3, the L-SMF may obtain the root key of the private network and the tunnel key by exchanging a message with the AAA server. For example, the L-SMF may request the root key of the private network and the tunnel key from the AAA server by using a message. In an example, S506 is specifically performed.

In another example, when the L-SMF determines that the root key of the private network and the tunnel key cannot be obtained based on the local configuration information or the user subscription data, the L-SMF may obtain the root key of the private network and the tunnel key by exchanging a message with the AAA server. For example, the L-SMF may request the root key of the private network and the tunnel key from the AAA server by using a message. In an example, S506 is specifically performed.

S506: The L-SMF obtains the root key of the private network and the tunnel key from the AAA server.

In some embodiments, there is no direct interface between the L-SMF and the AAA server, and the L-SMF may obtain the root key of the private network and/or the tunnel key from the AAA server through a UPF.

S507: The L-SMF generates the first security parameter based on the root key of the private network. A session security context may include one or more of the following: an intermediate key derived based on the root key of the private network. The root key of the private network may be a master session key (master session key, MSK) or an extended master session key (extended master session key, EMSK).

In an example, the L-SMF may generate an intermediate key Knpn based on the root key of the private network and an auxiliary parameter. The intermediate key may be referred to as Knpn, and the intermediate key is used to derive a security key of the user plane. For example, the security key of the user plane includes an encryption key Kenc and/or an integrity key Kint that are/is used for user plane service data transmission between the terminal device and a network device side.

For example, the auxiliary parameter may include one or more of the S-NSSAI, the DNN, or a downlink NAS message count (downlink NAS count, DL NAS Count). The DL NAS Count may be sent by the AMF to the L-SMF. The auxiliary parameter may alternatively include another preset parameter.

S508: The L-SMF sends, to the AMF, the first security parameter encrypted by using the tunnel key. Specifically, the L-SMF may send, to the AMF by using an N11 interface message, the first security parameter encrypted by using the tunnel key. For example, the N11 interface message may be a service-based interface message Namf_Communication_N1N2MessageTransfer.

Optionally, the L-SMF may further send the auxiliary parameter to the AMF.

S509: After receiving the first security parameter encrypted by using the tunnel key, the AMF forwards, to the RAN device, the first security parameter encrypted by using the tunnel key.

Optionally, the AMF may further forward the auxiliary parameter to the RAN device.

S510: After receiving the first security parameter encrypted by using the tunnel key, the RAN device decrypts, by using the preconfigured tunnel key, the first security parameter encrypted by using the tunnel key, to obtain the first security parameter.

In an example, the RAN device is preconfigured with one tunnel key.

In another example, the RAN device is configured with a plurality of tunnel keys, and there is a mapping relationship between the tunnel keys and DNNs or pieces of S-NSSAI, so that the RAN device may determine, from the plurality of locally configured tunnel keys based on the DNNs or the pieces of S-NSSAI, a tunnel key used to decrypt the first security parameter.

S511: The RAN device completes derivation of an air interface user plane key on the RAN device side based on an intermediate key in the first security parameter.

Optionally, the RAN device may further derive an air interface control plane key based on the first security parameter.

S512: The L-SMF sends the auxiliary parameter to the terminal device through the AMF, where the auxiliary parameter is used by the terminal device to derive the intermediate key for generating the air interface user plane key. In an example, the L-SMF may send the auxiliary parameter to the AMF, and the AMF sends the auxiliary parameter to the terminal device by using a NAS message. In another example, the L-SMF may send the auxiliary parameter to the AMF, the AMF sends the auxiliary parameter to the RAN device, and the RAN device sends the auxiliary parameter to the terminal device. For example, the RAN device may send the auxiliary parameter to the terminal device by using an RRC connection reconfiguration message.

Optionally, the auxiliary parameter may be further used by the terminal device to derive an intermediate key for generating the air interface control plane key.

S513: The terminal device generates the intermediate key based on the root key of the private network and the auxiliary parameter, and derives the air interface user plane key based on the intermediate key. Subsequently, user plane service data transmission between the terminal device and the RAN device is protected by using the air interface user plane key.

Optionally, the terminal device may alternatively generate the intermediate key based on the root key of the private network and the auxiliary parameter, and then derive the air interface control plane key by using the intermediate key.

It should be noted that a sequence of performing S512 and S508 is not limited in this embodiment of this application. In a possible example, the L-SMF may send the auxiliary parameter and the first security parameter to the AMF by using a message.

In Example 1, the first security parameter is transmitted between the L-SMF and the RAN device, and the first security parameter generated in the private network is protected by using the tunnel key, so that security of the first security parameter during derivation or transmission is ensured.

### Example 2:

A security tunnel is set up between a RAN device and an L-SMF by using an AMF as a forwarding network element. In this embodiment, the security tunnel is an internet protocol security (internet protocol security, IPsec) tunnel. An example in which setup of the IPsec tunnel is triggered by the L-SMF is used. The L-SMF transmits a first security parameter to the RAN device through the IPsec tunnel that is set up.

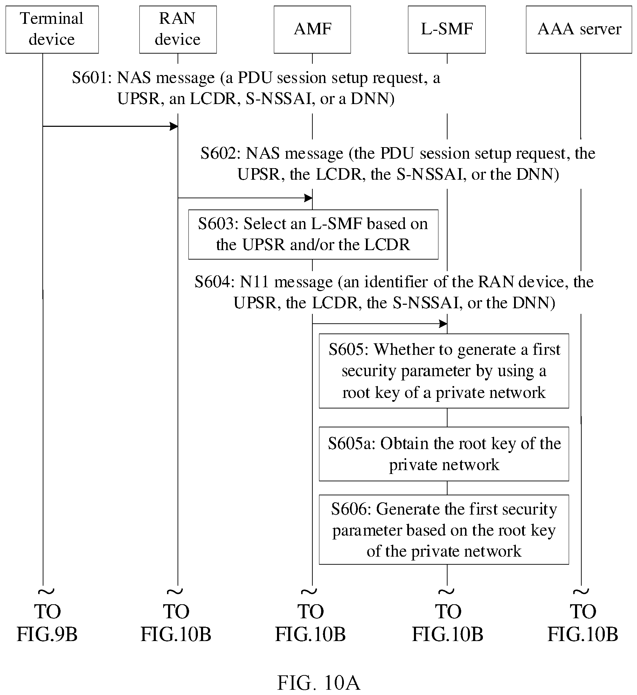

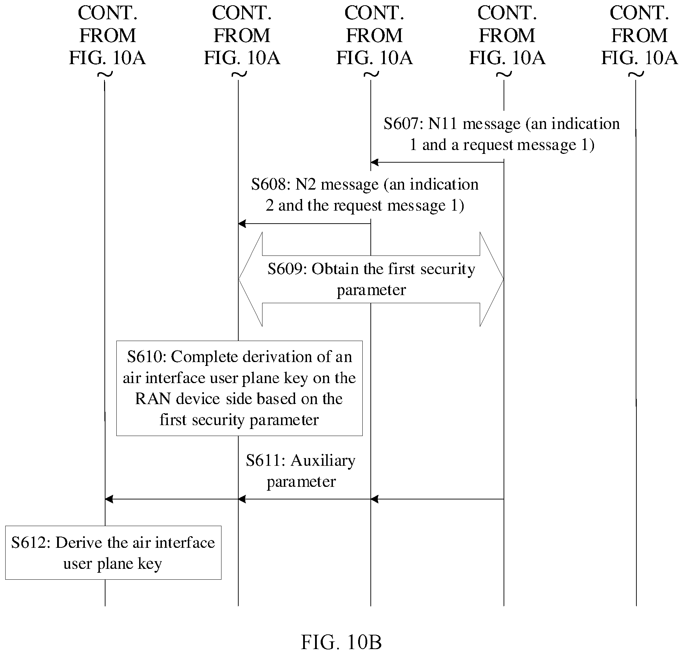

FIG. 10A and FIG. 10B are a schematic flowchart of a security parameter obtaining method according to an embodiment of this application.

For S601 to S605, refer to S501 to S505. Details are not described herein again.

For S605a, refer to S505a. Details are not described herein again.

For S606, refer to S507. Details are not described herein again.

S607: The L-SMF sends an N11 message to the AMF. The N11 message includes an indication 1 and an IPsec message container (IPsec msg container). The N11 message may be a service-based interface message Namf_Communication_N1N2MessageTransfer, and the service-based interface message may include the indication 1 and the IPsec msg container.

The IPsec msg container is used to carry (or encapsulate) a message exchanged between the L-SMF and the RAN device. A request message 1 used to set up the IPsec tunnel is encapsulated in the IPsec msg container sent by the L-SMF to the AMF.

Optionally, the N11 message may further include an auxiliary parameter.

S608: After receiving the N11 message, the AMF sends an N2 message to the RAN device. The N2 message includes the IPsec msg container, and carries the request message 1. Optionally, the N2 message may further include an indication 2, and the indication 2 indicates that the N2 message carries a message sent by the L-SMF. Optionally, the N2 message may further include the auxiliary parameter. For a related description of the N2 message, refer to the related description in step S304. Details are not described herein again.

S609: After the RAN device and the L-SMF complete setup of the IPsec tunnel, the RAN device obtains, through the IPsec tunnel, the first security parameter generated by the L-SMF.

For a manner of obtaining, through the IPsec tunnel, the first security parameter generated by the L-SMF, refer to the related description in the embodiment corresponding to FIG. 7B. Details are not described herein again.

S610: The RAN device completes derivation of an air interface user plane key on the RAN device side based on the first security parameter.

Optionally, the RAN device may further derive an air interface control plane key based on the first security parameter.

S611: The L-SMF sends the auxiliary parameter to a terminal device through the AMF, where the auxiliary parameter is used by the terminal device to derive an intermediate key for generating the air interface user plane key. In an example, the L-SMF may send the auxiliary parameter to the AMF, and the AMF sends the auxiliary parameter to the terminal device by using a NAS message. In another example, the L-SMF may send the auxiliary parameter to the AMF, the AMF sends the auxiliary parameter to the RAN device, and the RAN device sends the auxiliary parameter to the terminal device. For example, the RAN device may send the auxiliary parameter to the terminal device by using an RRC connection reconfiguration message.

Optionally, the auxiliary parameter may be further used by the terminal device to derive an intermediate key for generating the air interface control plane key.

S612: The terminal device generates the intermediate key based on a root key of a private network and the auxiliary parameter, and derives the air interface user plane key based on the intermediate key.

Optionally, the terminal device may alternatively generate the intermediate key based on the root key of the private network and the auxiliary parameter, and then derive the air interface control plane key by using the intermediate key.

It should be noted that a sequence of performing S607 and S611 is not limited in this embodiment of this application.

In Example 2, the first security parameter generated in the private network is protected by using the IPsec tunnel set up through a control plane network element (the AMF is used as a forwarding network element), so that security of the first security parameter during derivation or transmission is ensured.

Example 3: A UPF of a private network is used as a forwarding network element for setting up an internet protocol security (internet protocol security, IPsec) tunnel between a RAN device and an L-SMF. An example in which setup of the IPsec tunnel is triggered by the RAN device is used. The L-SMF transmits a first security parameter to the RAN device through the IPsec tunnel that is set up.

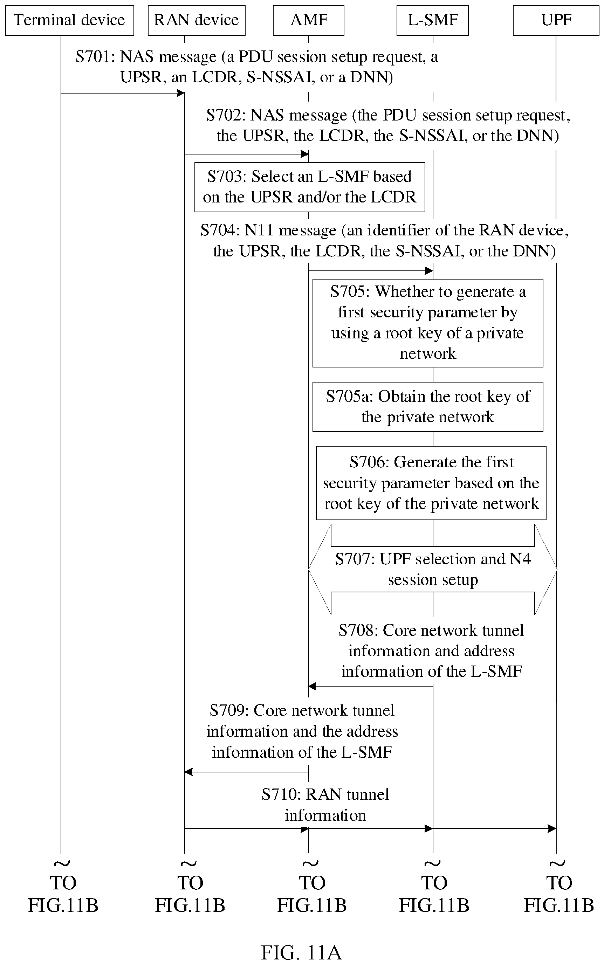

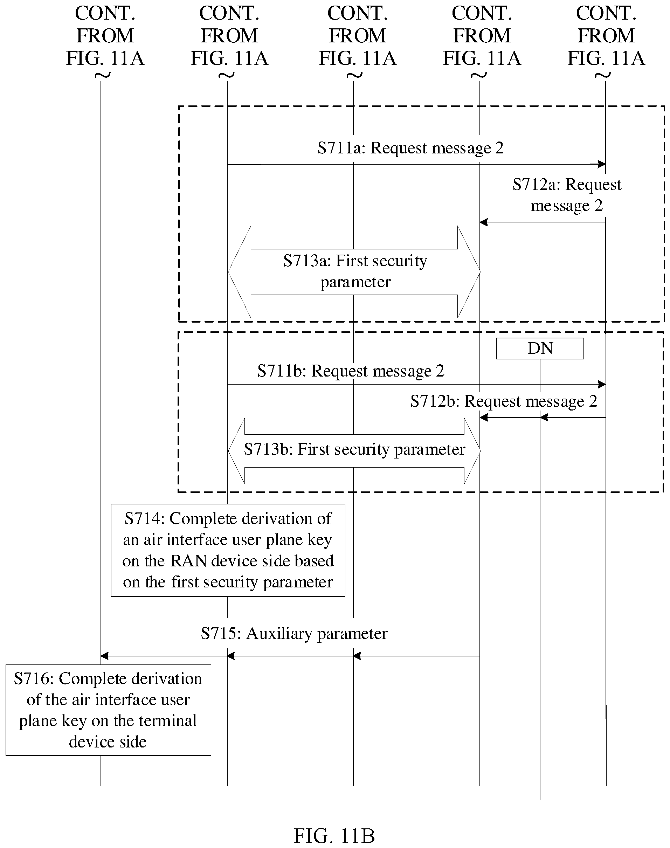

FIG. 11A and FIG. 11B are a schematic flowchart of a security parameter obtaining method according to Example 3.

For S701 to S705, refer to S501 to S505. Details are not described herein again.

For S705a, refer to S505a. Details are not described herein again.

For S706, refer to S507. Details are not described herein again.

S707: The L-SMF performs procedures such as UPF selection and N4 session setup, to obtain core network tunnel information (CN Tunnel info).

In the session setup procedure, the L-SMF sends address information of the L-SMF (L-SMF) to the RAN device. Specifically, in the session setup procedure, the L-SMF sends the CN Tunnel info to the RAN device through an AMF, and the address information of the L-SMF is further included. The address information of the L-SMF may include an IP address and/or a port (port) number of the L-SMF. The CN Tunnel info is used to set up an N3 tunnel between the UPF and the RAN device.

S708: The L-SMF sends an N11 message to the AMF, to send the core network tunnel information (CN Tunnel info) and the address information of the L-SMF.

S709: After receiving the CN Tunnel info and the address information of the L-SMF, the AMF sends the CN Tunnel info and the address information of the L-SMF to the RAN device.

S710: The RAN device transfers RAN tunnel info to the UPF, so that setup of the N3 tunnel is completed.

The RAN device triggers setup of the IPsec tunnel between the RAN device and the L-SMF based on the received address information of the SMF.

In a possible example, on the IPsec tunnel set up between the RAN device and the L-SMF, the UPF may be used for forwarding. The UPF obtains a forwarding rule, where the forwarding rule indicates to forward an IP packet to the L-SMF after the IP packet from the RAN device is received and when a destination address indicates the L-SMF. The forwarding rule may be indicated by the L-SMF to the UPF, or the forwarding rule may be configured by a PCF to the UPF.

S711a: The RAN device sends, to the UPF, a request message 2 used to set up the IPsec tunnel.

For example, the request message 2 may be encapsulated in a format of an IP packet and sent to the UPF.

S712a: The UPF sends the request message 2 to the L-SMF according to the forwarding rule.

Optionally, the RAN device and the L-SMF perform a plurality of message interactions to complete setup of the IPsec tunnel.

It should be understood that, in a process of setting up the IPsec tunnel, the RAN device and the L-SMF negotiate an encryption key used for the IPsec tunnel, to subsequently transmit the first security parameter in an encryption manner. The RAN device and the L-SMF may negotiate, through one or more interactions, the encryption key used for the IPsec tunnel, to complete setup of the IPsec tunnel. FIG. 11A and FIG. 11B show only one interaction process, and another interaction process may be further included. This is not limited in embodiments of this application.

S713a: After setup of the IPsec tunnel is completed, the L-SMF sends the first security parameter to the RAN device through the IPsec tunnel. An IP packet carrying the first security parameter is sent to the RAN device. The first security parameter carried in the IP packet is encrypted by using the encryption key.

In another possible example, on the IPsec tunnel set up between the RAN device and the L-SMF, a UPF and a data network (DN) are used for forwarding.

Optionally, the L-SMF may further send an auxiliary parameter to the RAN device.

S711b: The RAN device sends a request message 2 to the UPF. The request message 2 is carried in an IP packet, and a destination address indicated by the IP packet is the address information of the L-SMF.

S712b: The UPF sends the IP packet carrying the request message 2 to the data network DN based on the address information of the L-SMF, and sends, through addressing in the DN network, the IP packet carrying the request message 2 to the L-SMF.

S713b: The L-SMF includes the first security parameter to the IP packet, and sends the IP packet to the RAN device through the IPsec tunnel.

S714: The RAN device completes derivation of an air interface user plane key on the RAN device side based on the first security parameter.

Optionally, the RAN device may further derive an air interface control plane key based on the first security parameter.

S715: The L-SMF sends the auxiliary parameter to a terminal device through the AMF. For example, after the AMF receives the auxiliary parameter sent by the L-SMF, the AMF sends the auxiliary parameter to the terminal device by using a NAS message. For another example, the AMF may send the auxiliary parameter to the RAN device, and the RAN device may send the auxiliary parameter to the terminal device by using an RRC signaling message.

Optionally, the auxiliary parameter may be further used by the terminal device to derive an intermediate key for generating the air interface control plane key.

S716: After receiving the auxiliary parameter, the terminal device generates the intermediate key based on a root key of the private network and the auxiliary parameter, and then completes derivation of the air interface user plane key on the terminal device side based on the intermediate key.

Optionally, the terminal device may alternatively generate the intermediate key based on the root key of the private network and the auxiliary parameter, and then derive the air interface control plane key by using the intermediate key.

It should be noted that, in this embodiment of this application, a sequence of performing S712a and S715 is not limited, and a sequence of performing S712b and S715 is not limited.

In Example 3, the first security parameter generated in the private network is protected by using the IPsec tunnel set up through the UPF of the private network, so that security of the first security parameter during derivation or transmission is ensured.

Example 4: A UPF of a private network is used as a forwarding network element for setting up an IPsec tunnel between a RAN device and an L-SMF. An example in which setup of the IPsec tunnel is triggered by the RAN device is used. The L-SMF transmits a first security parameter to the RAN device through the IPsec tunnel that is set up.

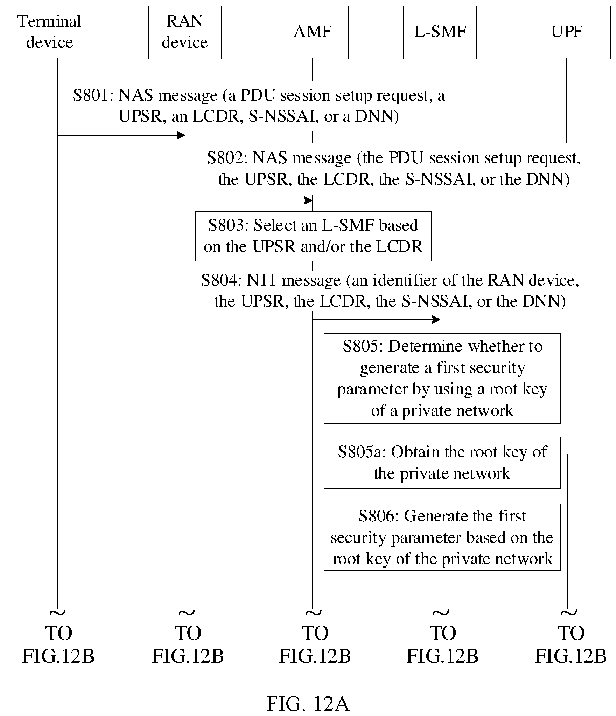

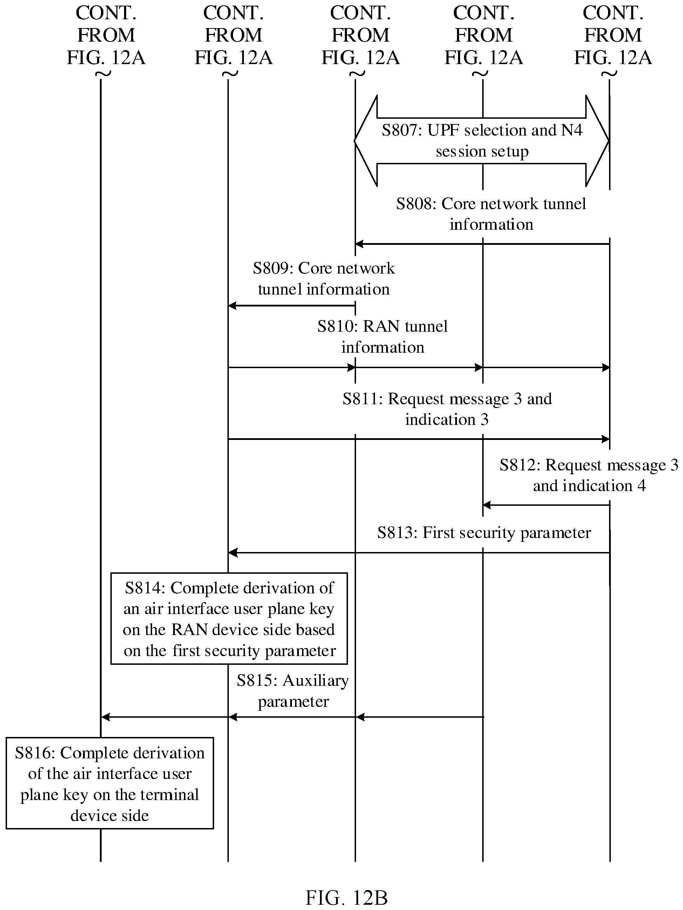

FIG. 12A and FIG. 12B are a schematic flowchart of a security parameter obtaining method according to Example 4.

For S801 to S805, refer to S501 to S505. Details are not described herein again.

For S805a, refer to S505a. Details are not described herein again.

For S806, refer to S507. Details are not described herein again.

S807: The L-SMF performs procedures such as UPF selection and N4 session setup, to obtain CN Tunnel info.

Specifically, in the session setup procedure, the L-SMF sends the core network tunnel information (CN Tunnel info) to the RAN device through an AMF. The CN Tunnel info is used to set up an N3 tunnel between the UPF and the RAN device.

S808: The L-SMF sends an N11 message to the AMF, to send the core network tunnel information (CN Tunnel info).

S809: After receiving the CN Tunnel info, the AMF sends the CN Tunnel info to the RAN device.

S810: The RAN device transfers RAN tunnel info to the UPF, so that setup of the N3 tunnel is completed.

S811: The RAN device requests to set up the IPsec tunnel. For example, the RAN device sends a request message 3 to the UPF by using an N3 message. For example, the request message 3 may be carried in an IPsec msg container of the N3 message. Optionally, the N3 message includes an indication 3. The request message 3 is used to request to set up the IPsec tunnel to the L-SMF. The indication 3 indicates the UPF to forward, to the L-SMF, the request message 3 from the RAN device.

The IPsec msg container is used to carry (or encapsulate) a message exchanged between the L-SMF and the RAN device. The request message 3 used to set up the IPsec is encapsulated in the IPsec msg container sent by the L-SMF to the UPF.

S812: The UPF sends the request message 3 to the L-SMF. For example, the UPF sends the request message 3 to the L-SMF by using an N4 message. The request message 3 may be carried in an IPsec msg container. The N4 message may further carry an indication 4. The indication 4 indicates that the N4 message carries the request message 3 that is from the RAN device and that is used to set up the IPsec.

Optionally, the RAN device and the L-SMF perform a plurality of message interactions to complete setup of the IPsec tunnel.

It should be understood that, in a process of setting up the IPsec tunnel, the RAN device and the L-SMF negotiate an encryption key used for the IPsec tunnel, to subsequently transmit the first security parameter in an encryption manner. The RAN device and the L-SMF may negotiate, through one or more interactions, the encryption key used for the IPsec tunnel, to complete setup of the IPsec tunnel. FIG. 12A and FIG. 12B show only one interaction process, and another interaction process may be further included. This is not limited in embodiments of this application.

S813: After setup of the IPsec tunnel is completed, the L-SMF sends the first security parameter to the RAN device through the IPsec tunnel.

Optionally, the L-SMF may further send an auxiliary parameter to the RAN device through the IPsec tunnel.

For S814 to S816, refer to S714 to S716. Details are not described herein again.

In Example 4, the first security parameter generated in the private network is protected by using the IPsec tunnel set up through the UPF, so that security of the first security parameter during derivation or transmission is ensured.

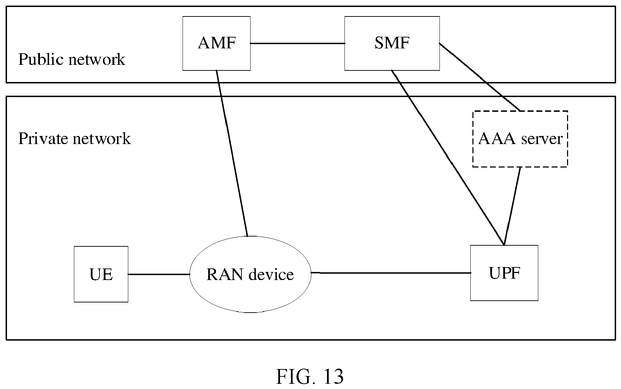

FIG. 13 is a schematic diagram of another possible network deployment architecture according to an embodiment of this application. It should be noted that FIG. 13 is merely an example, and a quantity and types of network elements included in a network are not specifically limited.

In FIG. 13, a private network and a public network share control plane network elements (including an AMF and an SMF) of the public network. In FIG. 13, private network session management (for example, setup/modification/deletion) is performed by the SMF of the public network. In FIG. 13, an example in which an authentication network element is an AAA server is used. The AAA server is deployed in the private network. The AAA server may be configured to store a root key of the private network. Further, the AAA server is configured to perform an operation, for example, deriving a first security parameter based on the root key of the private network.

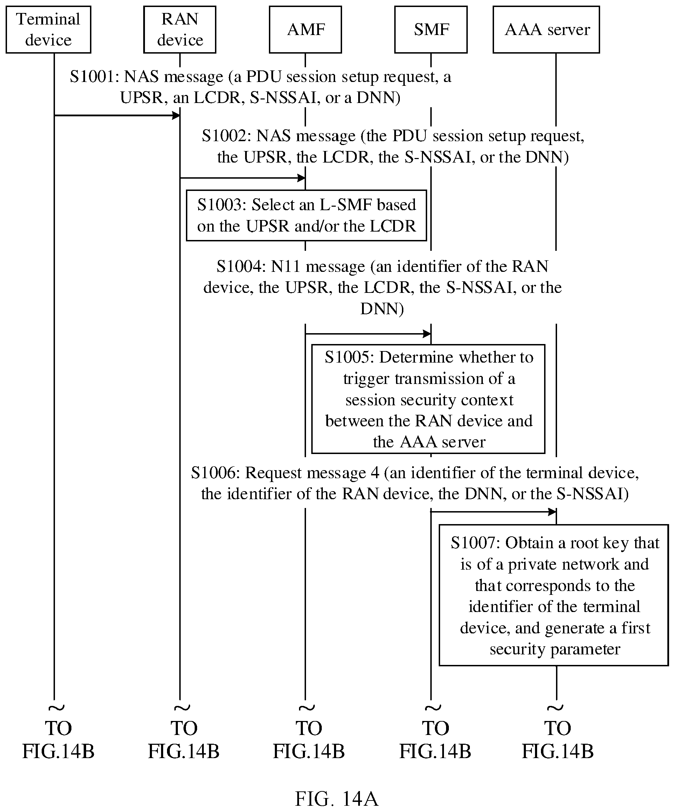

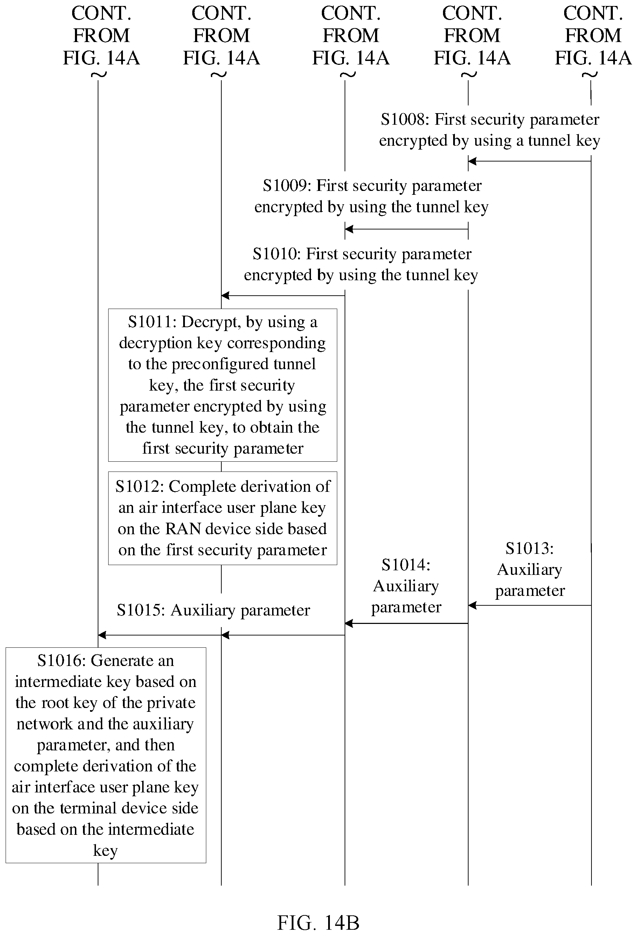

Example 5: With reference to FIG. 13, the first security parameter is protected by using a tunnel key used to encrypt the first security parameter. FIG. 14A and FIG. 14B are a schematic flowchart of a possible security parameter obtaining method. In FIG. 14A and FIG. 14B, an example in which a derivation network element of a private network is an authentication network element of the private network is used. An example in which the authentication network element of the private network is an AAA server is used.

For S1001 to 51004, refer to S501 to S504. Details are not described herein again.

S1005: After receiving, from an AMF, an N11 message used to create a session context, an SMF determines whether to trigger transmission of a first security parameter between a RAN device and the AAA server. If yes, S1006 is performed.

In an example, the SMF obtains user subscription data, and determines, based on the user subscription data, to trigger transmission of the first security parameter between the RAN device and the AAA server. For example, the SMF may obtain the user subscription data from a UDM.

In another example, if the SMF determines that the N11 message carries an LCDR or carries a UPSR and an LCDR, the SMF determines to trigger transmission of the first security parameter between the RAN device and the AAA server.

In still another example, the SMF determines, based on local configuration information, to trigger transmission of the first security parameter between the RAN device and the AAA server.

S1006: The SMF sends, to the AAA server, a request message 4 used to request the first security parameter, where a parameter carried in the request message 4 includes one or more of the following: an identifier of a terminal device, an identifier of the RAN device, a DNN, S-NSSAI, or the like.

S1007: After receiving the request message 4 from the SMF, the AAA server obtains a root key of the private network, and generates the first security parameter based on the root key of the private network. For example, the AAA server may generate an intermediate key Knpn based on an auxiliary parameter (for example, the NSSAI, the DNN, or a DL count) and the root key MSK/EMSK that is of the private network and that corresponds to the identifier of the terminal device. The first security parameter includes the intermediate key Knpn.

For a manner in which the AAA server obtains the root key of the private network, refer to the related description in step S101a. Details are not described herein again.

The AAA server determines a tunnel key based on one or more of the identifier of the RAN device, the DNN, or the S-NSSAI, and encrypts the first security parameter by using the tunnel key.

In an example, the tunnel key may be determined based on one of the foregoing items. For example, the AAA server can determine the tunnel key based on the identifier of the RAN device. The AAA server stores a mapping relationship between the identifier of the RAN device and the tunnel key. For another example, the AAA server can determine the tunnel key based on the DNN. The AAA server stores a mapping relationship between the DNN and the tunnel key. For still another example, the AAA server can determine the tunnel key based on the S-NSSAI. The AAA server stores a mapping relationship between the S-NSSAI and the tunnel key.

In another example, the AAA server may determine the tunnel key based on two of the foregoing items. For example, the AAA server can determine the tunnel key based on the identifier of the RAN device and the DNN. The AAA server stores a mapping relationship between the identifier of the RAN device, the DNN, and the tunnel key. For another example, the AAA server can determine the tunnel key based on the DNN and the S-NSSAI. The AAA server stores a mapping relationship between the DNN, the S-NSSAI, and the tunnel key. For still another example, the AAA server can determine the tunnel key based on the S-NSSAI and the identifier of the RAN device. The AAA server stores a mapping relationship between the S-NSSAI, the identifier of the RAN device, and the tunnel key.

In still another example, the AAA server stores a mapping relationship between the DNN, the identifier of the RAN device, the S-NSSAI, and the tunnel key.

Optionally, to improve security, the N11 message sent by the AMF to the SMF carries an identifier used to indicate an identity of the RAN device. The identifier of the RAN device that is sent by the SMF to the AAA server may be obtained through conversion of the identifier used to indicate the identity of the RAN device. For example, the identifier of the RAN device may be obtained through conversion (for example, anonymization processing) of a Global RAN Node ID and/or a RAN Node Name.

S1008: The AAA server sends, to the SMF, the first security parameter encrypted by using the tunnel key.

S1009: The SMF network element sends, to the AMF, the first security parameter encrypted by using the tunnel key. Specifically, the SMF may send, to the AMF by using an N11 message, the first security parameter encrypted by using the tunnel key. Optionally, the N11 message may further include the auxiliary parameter.

S1010: The AMF sends, to the RAN device, the first security parameter encrypted by using the tunnel key. Optionally, the AMF sends the auxiliary parameter to the RAN device.

S1011: After receiving the first security parameter encrypted by using the tunnel key, the RAN device decrypts, by using the preconfigured tunnel key, the first security parameter encrypted by using the tunnel key, to obtain the first security parameter.

S1012: The RAN device completes derivation of a security key of a user plane on the RAN device side based on an intermediate key in the first security parameter.

Optionally, the RAN device may further derive an air interface control plane key based on the first security parameter.

S1013 : The AAA server sends, to the SMF, the auxiliary parameter used to generate the first security parameter.

S1014: The SMF sends the auxiliary parameter to the AMF.

S1015: The AMF sends the auxiliary parameter to the terminal device.

For example, the AMF may send the auxiliary parameter to the terminal device by using a NAS message. For another example, the AMF sends the auxiliary parameter to the RAN device, and the RAN device sends the auxiliary parameter to the terminal device by using an RRC connection reconfiguration message.

S1016: After receiving the auxiliary parameter, the terminal device generates the intermediate key based on the root key of the private network and the auxiliary parameter, and then completes derivation of an air interface user plane key on the terminal device side based on the intermediate key. Subsequently, user plane service data transmission between the terminal device and the RAN device is protected by using the security key of the user plane.

Optionally, the terminal device may alternatively generate the intermediate key based on the root key of the private network and the auxiliary parameter, and then derive the air interface control plane key by using the intermediate key.

It should be noted that a time sequence of S 1013 and S 1008 is not limited in this application. In an example, step S 1013 and step S 1008 may be implemented by using a same message. In other words, the AAA server may alternatively send the auxiliary parameter and the first security parameter to the SMF by using one message. Further, the SMF may alternatively send the auxiliary parameter and the first security parameter to the AMF by using one message.

In Example 5, the AAA server in the private network completes derivation of the first security parameter, and sends the first security parameter to the RAN device in an encryption manner, so that security of the first security parameter during derivation or transmission is ensured.

It should be noted that, Example 1 to Example 5 describe, with reference to the PDU session setup procedure, obtaining method procedures of the first security parameter. Obtaining of the first security parameter may be further applied to a PDU session modification procedure, a PDU session re-setup procedure, or the like. This is not specifically limited in embodiments of this application.

In the foregoing embodiments provided in this application, the methods provided in embodiments of this application are separately described from perspectives of interaction between devices such as the network element of the private network, the network element of the public network, the user plane network element of the private network, the access network device, and the terminal device. To implement functions in the methods provided in the foregoing embodiments of this application, the network element of the private network, the network element of the public network, the user plane network element of the private network, the access network device, the terminal device, and the like each may include a hardware structure and/or a software module, to implement the foregoing functions in a form of the hardware structure, the software module, or a combination of the hardware structure and the software module. Whether a function in the foregoing functions is performed in a form of the hardware structure, the software module, or the combination of the hardware structure and the software module depends on particular applications and design constraints of the technical solutions.

With reference to the accompanying drawings, the following describes apparatuses configured to implement the foregoing methods in embodiments of this application. Therefore, all the foregoing content may be used in the following embodiments. Repeated content is not described again.

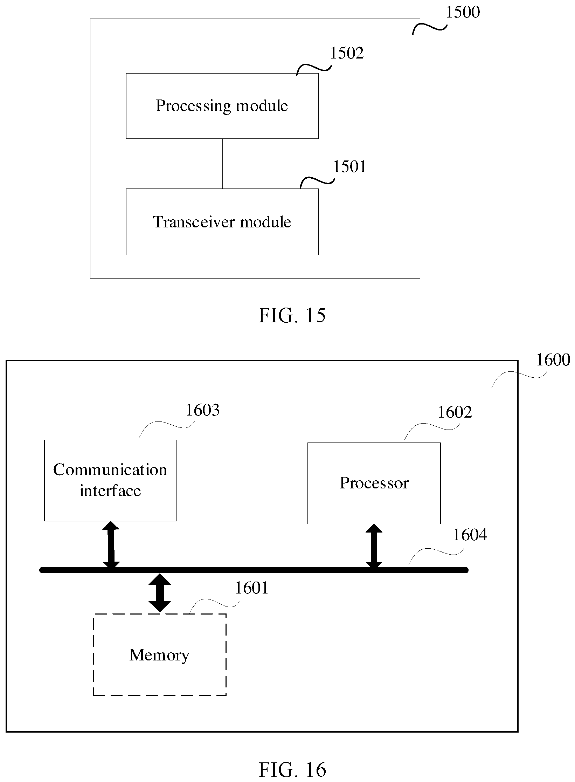

FIG. 15 is a possible example block diagram of a communication apparatus according to this application. The communication apparatus 1500 may correspondingly implement functions or steps implemented by the network element of the private network (the session management network element of the private network or the authentication network element of the private network), the network element of the public network, the user plane network element of the private network, the access network device, and the terminal device in the foregoing method embodiments. The communication apparatus may include a transceiver module 1501 and a processing module 1502. Optionally, a storage module may be further included. The storage module may be configured to store instructions (code or a program) and/or data. The transceiver module 1501 and the processing module 1502 may be coupled to the storage module. For example, the processing module 1502 may read the instructions (the code or the program) and/or the data in the storage module, to implement a corresponding method. The foregoing modules may be disposed independently, or may be partially or all integrated. Optionally, the transceiver module 1501 may include a sending module and a receiving module. The sending module is configured to perform a sending operation, and the receiving module is configured to perform a receiving operation.

It should be understood that the processing module 1502 may be a processor or a controller, for example, may be a general-purpose central processing unit (central processing unit, CPU), a general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The processing module 1502 may implement or execute various example logical blocks, modules, and circuits described with reference to content disclosed in this application. Alternatively, the processor may be a combination of processors implementing a computing function, for example, a combination of one or more microprocessors, or a combination of a DSP and a microprocessor. The transceiver module 1501 is an interface circuit of the apparatus, and is configured to receive a signal from another apparatus. For example, when the apparatus is implemented in a form of a chip, the transceiver module 1501 is an interface circuit used by the chip to receive a signal from another chip or apparatus, or is an interface circuit used by the chip to send a signal to another chip or apparatus.

The communication apparatus 1500 may be the network element of the private network (the session management network element of the private network or the authentication network element of the private network), the network element of the public network, the user plane network element of the private network, the access network device, or the terminal device in the foregoing embodiments, or may be a chip used in the network element of the private network (the session management network element of the private network or the authentication network element of the private network), the network element of the public network, the user plane network element of the private network, the access network device, or the terminal device. For example, when the communication apparatus 1500 is the network element of the private network (the session management network element of the private network or the authentication network element of the private network), the network element of the public network, the user plane network element of the private network, the access network device, or the terminal device, the processing module 1502 may be, for example, a processor, and the transceiver module 1501 may be, for example, a transceiver. Optionally, the transceiver may include a radio frequency circuit or an input/output interface, and the storage unit may be, for example, a memory. For example, when the communication apparatus 1500 is the chip used in the network element of the private network (the session management network element of the private network or the authentication network element of the private network), the network element of the public network, the user plane network element of the private network, the access network device, or the terminal device, the processing module 1502 may be, for example, a processor, and the transceiver module 1501 may be, for example, an input/output interface, a pin, or a circuit. The processing module 1502 may execute computer-executable instructions stored in the storage unit. Optionally, the storage unit is a storage unit in the chip, for example, a register or a cache. Alternatively, the storage unit may be a storage unit that is located outside the chip and that is in the network element of the private network (the session management network element of the private network or the authentication network element of the private network), the network element of the public network, the user plane network element of the private network, the access network device, or the terminal device, for example, a read-only memory (read-only memory, ROM) or another type of static storage device that can store static information and instructions, or a random access memory (random access memory, RAM).

In some possible implementations, the communication apparatus 1500 can correspondingly implement behavior and functions of the session management network element of the private network (or the L-SMF) in the foregoing method embodiments. For example, the communication apparatus 1500 may be the session management network element of the private network, or may be a component (for example, a chip or a circuit) used in the session management network element of the private network. The transceiver module 1501 may be configured to support communication between the session management network element of the private network and another network entity, for example, support communication between the session management network element of the private network and the network element of the public network, the user plane network element of the private network, the access network device, or the terminal device shown in FIG. 4 to FIG. 14A and FIG. 14B. The processing module 1502 is configured to control and manage an action of the session management network element of the private network. For example, the processing module 1502 is configured to support the session management network element of the private network in performing an operation other than sending and receiving operations of the session management network element of the private network (or the derivation network element of the private network or the L-SMF) in FIG. 4 to FIG. 14A and FIG. 14B.

In some embodiments, the processing module 1502 is configured to obtain a root key of a private network of a terminal device, where the terminal device sets up a control plane connection to a network element of a public network. The processing module 1502 is further configured to generate a first security parameter of the terminal device based on the root key of the private network, where the first security parameter is used to derive an air interface user plane key of the private network of the terminal device. The transceiver module 1501 is configured to send the first security parameter to an access network device of the terminal device.

In some other possible implementations, the communication apparatus 1500 can correspondingly implement behavior and functions of the control plane network element of the public network in the foregoing method embodiments. For example, the communication apparatus 1500 may be the control plane network element of the public network, or may be a component (for example, a chip or a circuit) used in the control plane network element of the public network. The transceiver module 1501 may be configured to support communication between the control plane network element of the public network and another network entity, for example, support communication between the control plane network element of the public network and the network element of the private network, the user plane network element of the private network, the access network device, or the terminal device shown in FIG. 4 to FIG. 14A and FIG. 14B. The processing module 1502 is configured to control and manage an action of the control plane network element of the public network. For example, the processing module 1502 is configured to support the control plane network element of the public network in performing an operation other than sending and receiving operations of the control plane network element of the public network (for example, the AMF of the public network) in FIG. 4 to FIG. 14A and FIG. 14B.

In some embodiments, the transceiver module 1501 is configured to receive first parameter information from a terminal device, where the first parameter information indicates to derive an air interface user plane key of the terminal device by using a root key that is of a private network and that corresponds to the terminal device. The processing module 1502 is configured to select a session management network element of the private network based on the first parameter information. The transceiver module 1501 is further configured to send the first parameter information to the session management network element of the private network.

In some other possible implementations, the communication apparatus 1500 can correspondingly implement behavior and functions of the user plane network element of the private network in the foregoing method embodiments. For example, the communication apparatus 1500 may be the user plane network element of the private network, or may be a component (for example, a chip or a circuit) used in the user plane of the private network. The transceiver module 1501 may be configured to support communication between the user plane of the private network and another network entity, for example, support communication between the user plane network element of the private network and the network element of the private network, the network element of the public network, the access network device, or the terminal device shown in FIG. 4 to FIG. 14A and FIG. 14B. The processing module 1502 is configured to control and manage an action of the user plane network element of the private network. For example, the processing module 1502 is configured to support the user plane of the private network in performing an operation other than sending and receiving operations of the user plane network element of the private network (for example, the UPF) in FIG. 4 to FIG. 14A and FIG. 14B.

In some embodiments, the receiving module is configured to receive a request message from an access network device, where the request message is used to request to set up a security tunnel to a network element of a private network, the security tunnel is used to transmit a first security parameter to be sent by the network element of the private network to the access network device, and the first security parameter is used to derive an air interface user plane key of a terminal device. The sending module is configured to send the request message to the network element of the private network.

In some other possible implementations, the communication apparatus 1500 can correspondingly implement behavior and functions of the access network device in the foregoing method embodiments. For example, the communication apparatus 1500 may be the access network device, or may be a component (for example, a chip or a circuit) used in the access network device. The transceiver module 1501 may be configured to support communication between the access network device and another network entity, for example, support communication between the access network device and the network element of the private network, the network element of the public network, or the terminal device shown in FIG. 4 to FIG. 14A and FIG. 14B. The processing module 1502 is configured to control and manage an action of the access network device. For example, the processing module 1502 is configured to support the access network device in performing an operation other than sending and receiving operations of the access network device (for example, the RAN device) in FIG. 4 to FIG. 14A and FIG. 14B.

In some embodiments, the transceiver module 1501 is configured to obtain a first security parameter from a network element of a private network, where the first security parameter is used to derive an air interface user plane key of a terminal device. The transceiver module 1501 is further configured to obtain a second security parameter from a network element of a public network, where the second security parameter is used to derive an air interface control plane key of the terminal device. The processing module 1502 is configured to: derive the air interface user plane key based on the first security parameter, and derive the air interface control plane key based on the second security parameter.

In some other possible implementations, the communication apparatus 1500 can correspondingly implement behavior and functions of the terminal device in the foregoing method embodiments. For example, the communication apparatus 1500 may be the terminal device, or may be a component (for example, a chip or a circuit) used in the terminal device. The transceiver module 1501 may be configured to support communication between the terminal device and another network entity, for example, support communication between the terminal device and the network element of the private network, the network element of the public network, the access network device, or the user plane network element shown in FIG. 4 to FIG. 14A and FIG. 14B. The processing module 1502 is configured to control and manage an action of the terminal device. For example, the processing module 1502 is configured to support the terminal device in performing all operations except sending and receiving operations of the terminal device in FIG. 4 to FIG. 14A and FIG. 14B.

FIG. 16 shows a communication apparatus 1600 according to an embodiment of this application. The communication apparatus 1600 may be a derivation network element of a private network (a session management network element of the private network or an authentication network element of the private network), and can implement a function of the derivation network element of the private network in the method provided in embodiments of this application. Alternatively, the communication apparatus 1600 may be an access network device, and can implement a function of the access network device in the method provided in embodiments of this application. Alternatively, the communication apparatus 1600 may be a control plane network element of a public network, and can implement a function of the control plane network element of the public network in the method provided in embodiments of this application. Alternatively, the communication apparatus 1600 may be an apparatus that can support a network element of a private network (a session management network element of the private network or an authentication network element of the private network), a network element of a public network, a user plane network element of the private network, an access network device, or a terminal device in implementing a corresponding function in the method provided in embodiments of this application. The communication apparatus 1600 may be a chip system. In this embodiment of this application, the chip system may include a chip, or may include a chip and another discrete device.

In hardware implementation, the transceiver module 1501 may be a transceiver, and the transceiver is integrated in the communication apparatus 1600, to constitute a communication interface 1603.

The communication apparatus 1600 includes at least one processor 1602. The processor 1602 may be a CPU, a microprocessor, an ASIC, or one or more integrated circuits configured to control program execution of the solutions in this application; and is configured to implement or support the communication apparatus 1600 in implementing a function of the network element of the private network (the session management network element of the private network or the authentication network element of the private network), the network element of the public network, the user plane network element of the private network, the access network device, or the terminal device in the method provided in embodiments of this application. For details, refer to the detailed description in the method example. Details are not described herein again.

The communication apparatus 1600 may further include at least one memory 1601, configured to store program instructions and/or data. The memory 1601 is coupled to the processor 1602. Couplings in this embodiment of this application are indirect couplings or communication connections between apparatuses, units, or modules, may be electrical, mechanical, or in another form, and are used for information interaction between the apparatuses, the units, or the modules. The processor 1602 may cooperate with the memory 1601. The processor 1602 may execute the program instructions and/or the data stored in the memory 1601, so that the communication apparatus 1600 implements a corresponding method. At least one of the at least one memory may be included in the processor 1602.

The communication apparatus 1600 may further include the communication interface 1603. The communication interface 1603 uses an apparatus such as any transceiver, and is configured to communicate with another device or a communication network, for example, the Ethernet, a radio access network (radio access network, RAN), a wireless local area network (wireless local area network, WLAN), or a wired access network. The communication interface 1603 is configured to communicate with another device through a transmission medium, so that an apparatus in the communication apparatus 1600 may communicate with the another device. For example, when the communication apparatus 1600 is the network element of the private network, the another device is the network element of the public network, the user plane network element of the private network, the access network device, or the terminal device. Alternatively, when the communication apparatus is the network element of the public network, the another device is the network element of the private network (the session management network element of the private network or the authentication network element of the private network), the user plane network element of the private network, the access network device, or the terminal device. The processor 1602 may send and receive data through the communication interface 1603. The communication interface 1603 may be specifically a transceiver.

A specific connection medium between the communication interface 1603, the processor 1602, and the memory 1601 is not limited in this embodiment of this application. In this embodiment of this application, the memory 1601, the processor 1602, and the communication interface 1603 are connected to each other through a bus 1604 in FIG. 16. The bus is represented by using a bold line in FIG. 16. A connection manner between other components is merely an example for description, and is not limited thereto. The bus may be classified into an address bus, a data bus, a control bus, or the like. For ease of representation, only one bold line is used to represent the bus in FIG. 16, but this does not mean that there is only one bus or only one type of bus.

In this embodiment of this application, the processor 1602 may be a general-purpose processor, a digital signal processor, an application-specific integrated circuit, a field programmable gate array or another programmable logic device, a discrete gate or transistor logic device, or a discrete hardware component, and may implement or perform the methods, steps, and logical block diagrams disclosed in embodiments of this application. The general-purpose processor may be a microprocessor, any conventional processor, or the like. The steps of the method disclosed with reference to embodiments of this application may be directly performed by a hardware processor, or may be performed by using a combination of hardware in the processor and a software module.

The memory 1601 may be a ROM or another type of static storage device that can store static information and instructions, or a RAM or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another optical disk storage, an optical disc storage (including a compact optical disc, a laser disc, an optical disc, a digital versatile disc, a blue-ray optical disc, or the like), a magnetic disk storage medium or another magnetic storage device, or any other computer-accessible medium that can be used to carry or store expected program code in an instruction or data structure form. However, this is not limited thereto. The memory may exist independently and is connected to the processor through the communication bus 1604. The memory may alternatively be integrated with the processor.

The memory 1601 is configured to store computer-executable instructions for executing the solutions of this application, and the processor 1602 controls the execution. The processor 1602 is configured to execute the computer-executable instructions stored in the memory 1601, to implement the service management method provided in the foregoing embodiments of this application.

Optionally, the computer-executable instructions in this embodiment of this application may also be referred to as application program code. This is not specifically limited in this embodiment of this application.

An embodiment of this application further provides a communication system. Specifically, the communication system includes a network element of a private network (a session management network element of the private network or an authentication network element of the private network), a network element of a public network, a user plane network element of the private network, and an access network device. For example, the communication system includes the network element of the private network (the session management network element of the private network or the authentication network element of the private network), the network element of the public network, the user plane network element of the private network, and the access network device that are configured to implement related functions in FIG. 4 to FIG. 14A and FIG. 14B.

The network element of the private network (the session management network element of the private network or the authentication network element of the private network) is configured to implement a related function of the network element of the private network in FIG. 4 to FIG. 14A and FIG. 14B. The network element of the public network is configured to implement a related function of the network element of the public network in FIG. 4 to FIG. 14A and FIG. 14B. The access network device is configured to implement a related function of the access network device in FIG. 4 to FIG. 14A and FIG. 14B. The user plane network element of the private network is configured to implement a related function of the user plane network element of the private network in FIG. 4 to FIG. 14A and FIG. 14B. For details, refer to the related description in the method embodiment. Details are not described herein again.

An embodiment of this application further provides a computer-readable storage medium, including instructions. When the instructions are run on a computer, the computer is enabled to perform the method performed by the network element of the private network (the session management network element of the private network or the authentication network element of the private network), the network element of the public network, the user plane network element of the private network, the access network device, or the terminal device in FIG. 4 to FIG. 14A and FIG. 14B.

An embodiment of this application further provides a computer program product, including instructions. When the computer program product is run on a computer, the computer is enabled to perform the method performed by the network element of the private network (the session management network element of the private network or the authentication network element of the private network), the network element of the public network, the user plane network element of the private network, the access network device, or the terminal device in FIG. 4 to FIG. 14A and FIG. 14B.

An embodiment of this application provides a chip system. The chip system includes a processor, and may further include a memory, configured to implement a function of the network element of the private network (the session management network element of the private network or the authentication network element of the private network), the network element of the public network, the user plane network element of the private network, the access network device, or the terminal device in the foregoing method. The chip system may include a chip, or may include a chip and another discrete device.

A person of ordinary skill in the art may understand that various numbers such as "first" and "second" in this application are merely used for differentiation for ease of description, and are not used to limit the scope of embodiments of this application or indicate a sequence. The term "and/or" describes an association relationship between associated objects and indicates that three relationships may exist. For example, A and/or B may indicate the following three cases: Only A exists, both A and B exist, and only B exists. The character "/" usually indicates an "or" relationship between the associated objects. "At least one" means one or more. "At least two" means two or more. "At least one", "any one", or a similar expression thereof indicates any combination of the items, including a single item (piece) or any combination of a plurality of items (pieces). For example, at least one item (piece or type) of a, b, or c may indicate a, b, c, a and b, a and c, b and c, or a, b, and c, where a, b, and c may be singular or plural. "A plurality of" means two or more, and another quantifier is similar to this. In addition, an element (element) that appears in singular forms "a", "an", and "the" does not mean "one or only one" unless otherwise specified in the context, but means "one or more". For example, "a device" means one or more such devices.

All or a part of the foregoing embodiments may be implemented by using software, hardware, firmware, or any combination thereof. When software is used to implement the embodiments, all or a part of the embodiments may be implemented in a form of a computer program product. The computer program product includes one or more computer instructions. When the computer program instructions are loaded and executed on a computer, all or a part of the procedures or functions according to embodiments of this application are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (Solid State Disk, SSD)), or the like.

The various illustrative logical units and circuits in embodiments of this application may implement or operate the functions based on a design of a general-purpose processor, a digital signal processor, an application-specific integrated circuit (ASIC), a field programmable gate array (FPGA) or another programmable logical apparatus, a discrete gate or transistor logic, a discrete hardware component, or any combination thereof. The general-purpose processor may be a microprocessor. Optionally, the general-purpose processor may be any conventional processor, controller, microcontroller, or state machine. The processor may alternatively be implemented by a combination of computing apparatuses, for example, a digital signal processor and a microprocessor, a plurality of microprocessors, one or more microprocessors and a digital signal processor core, or any other similar configuration.

Steps of the methods or algorithms described in embodiments of this application may be directly embedded into hardware, a software unit executed by the processor, or a combination thereof. The software unit may be stored in a RAM memory, a flash memory, a ROM memory, an EPROM memory, an EEPROM memory, a register, a hard disk, a removable magnetic disk, a CD-ROM, or a storage medium of any other form in the art. For example, the storage medium may be connected to the processor, so that the processor can read information from the storage medium and write information to the storage medium. Optionally, the storage medium may alternatively be integrated into the processor. The processor and the storage medium may be disposed in the ASIC.

These computer program instructions may also be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

Although this application is described with reference to specific features and embodiments thereof, it is clear that various modifications and combinations may be made to them without departing from the scope of this application. Correspondingly, this specification and the accompanying drawings are merely example descriptions of this application defined by the appended claims, and are considered as any of or all modifications, variations, combinations, or equivalents that cover the scope of this application. It is clear that, a person skilled in the art can make various modifications and variations to this application without departing from the scope of this application. This application is intended to cover these modifications and variations of this application provided that they fall within the scope of the claims of this application.

## Claims

1. A security parameter obtaining method, comprising:
obtaining, by an access network device, a first security parameter from a network element of a private network, wherein the first security parameter is used to derive an air interface user plane key of a terminal device;
obtaining, by the access network device, a second security parameter from a network element of a public network, wherein the second security parameter is used to derive an air interface control plane key of the terminal device; and
deriving, by the access network device, the air interface user plane key based on the first security parameter, and deriving the air interface control plane key based on the second security parameter.

2. The method according to claim 1, wherein the first security parameter is encrypted by using a security parameter key; and
the deriving the air interface user plane key based on the first security parameter comprises:
decrypting the first security parameter by using the security parameter key, and deriving the air interface user plane key by using a decrypted first security parameter.

3. The method according to claim 1, wherein the obtaining a first security parameter from a network element of a private network comprises:
receiving the first security parameter from the network element of the private network through a security tunnel set up between the network element of the private network and the access network device.

4. The method according to claim 3, wherein the method further comprises:
requesting, by the access network device, the network element of the private network through a user plane network element of the private network to set up the security tunnel.

5. The method according to claim 4, wherein the requesting the network element of the private network through a user plane network element of the private network to set up the security tunnel comprises:
obtaining address information of the network element of the private network; and
requesting, based on the address information of the network element of the private network, the user plane network element of the private network to set up the security tunnel.

6. The method according to claim 4, wherein the requesting the network element of the private network through a user plane network element of the private network to set up the security tunnel comprises:
sending a request message to the user plane network element of the private network, wherein the request message is used to request to set up the security tunnel to the network element of the private network; and
receiving a response message sent by the user plane network element of the private network, wherein the response message indicates completion of setup of the security tunnel; and
the obtaining a first security parameter from a network element of a private network comprises:
receiving the first security parameter that is sent by the network element of the private network through the user plane network element of the private network.

7. The method according to claim 2, wherein the method further comprises:
requesting, by the access network device, the network element of the private network through the network element of the public network to set up the security tunnel.

8. The method according to claim 7, wherein the requesting the network element of the private network through the network element of the public network to set up the security tunnel comprises:
sending a request message to the network element of the public network, wherein the request message is used to request to set up the security tunnel to the network element of the private network; and
receiving a response message sent by the network element of the public network, wherein the response message indicates completion of setup of the security tunnel; and
the obtaining a first security parameter from a network element of a private network comprises:
receiving the first security parameter that is sent by the network element of the private network through the network element of the public network.

9. A communication system, comprising a network element of a private network and a network element of a public network, wherein
the network element of the private network is configured to: obtain a root key of the private network of a terminal device, generate a first security parameter of the terminal device based on the root key of the private network, and send the first security parameter to an access network device, wherein the first security parameter is used to derive an air interface user plane key of the terminal device; and
the network element of the public network is configured to: obtain a root key of the public network of the terminal device, generate a second security parameter of the terminal device based on the root key of the public network, and send the second security parameter to the access network device, wherein the second security parameter is used to derive an air interface control plane key of the terminal device.

10. The system according to claim 9, wherein the network element of the private network comprises a session management network element of the private network or an authentication network element of the private network.

11. The system according to claim 9, wherein the system further comprises the access network device, configured to perform the method according to any one of claims 1 to 8.

12. A communication apparatus (1600), comprising a module configured to perform the method according to any one of claims 1 to 8.

13. A security parameter obtaining method, comprising:
obtaining, by a network element of a private network, a root key of the private network of a terminal device; generating, by the network element of the private network, a first security parameter of the terminal device based on the root key of the private network; and sending, by the network element of the private network, the first security parameter to an access network device, wherein the first security parameter is used to derive an air interface user plane key of the terminal device; and
obtaining, by a network element of a public network, a root key of the public network of the terminal device; generating, by the network element of the public network, a second security parameter of the terminal device based on the root key of the public network; and sending, by the network element of the public network, the second security parameter to the access network device, wherein the second security parameter is used to derive an air interface control plane key of the terminal device.

14. The method according to claim 13, further comprising:
obtaining, by the access network device, the first security parameter;
obtaining, by the access network device, the second security parameter; and
deriving, by the access network device, the air interface user plane key based on the first security parameter, and deriving, by the access network device, the air interface control plane key based on the second security parameter.

15. A computer-readable storage medium, wherein the computer-readable storage medium stores computer instructions, and when the computer instructions are executed, the method according to any one of claims 1 to 8, or claims 13 to 14 is enabled to be performed.

## Patentansprüche

1. Verfahren zum Erlangen von Sicherheitsparametern, umfassend:
Erlangen, durch ein Zugangsnetzgerät, eines ersten Sicherheitsparameters von einem Netzelement eines privaten Netzes, wobei der erste Sicherheitsparameter dazu verwendet wird, einen Luftschnittstellenbenutzerebenenschlüssel eines Endgeräts abzuleiten;
Erlangen, durch das Zugangsnetzgerät, eines zweiten Sicherheitsparameters von einem Netzelement eines öffentlichen Netzes, wobei der zweite Sicherheitsparameter dazu verwendet wird, einen Luftschnittstellensteuerebenenschlüssel des Endgeräts abzuleiten; und
Ableiten, durch das Zugangsnetzgerät, des Luftschnittstellenbenutzerebenenschlüssels basierend auf dem ersten Sicherheitsparameter und Ableiten des Luftschnittstellensteuerebenenschlüssels basierend auf dem zweiten Sicherheitsparameter.

2. Verfahren nach Anspruch 1, wobei der erste Sicherheitsparameter unter Verwendung eines Sicherheitsparameterschlüssels verschlüsselt wird; und
das Ableiten des Luftschnittstellenbenutzerebenenschlüssels basierend auf dem ersten Sicherheitsparameter Folgendes umfasst:
Entschlüsseln des ersten Sicherheitsparameters unter Verwendung des Sicherheitsparameterschlüssels und Ableiten des Luftschnittstellenbenutzerebenenschlüssels unter Verwendung eines entschlüsselten ersten Sicherheitsparameters.

3. Verfahren nach Anspruch 1, wobei das Erlangen eines ersten Sicherheitsparameters von einem Netzelement eines privaten Netzes Folgendes umfasst:
Empfangen des ersten Sicherheitsparameters von dem Netzelement des privaten Netzes über einen Sicherheitstunnel, der zwischen dem Netzelement des privaten Netzes und dem Zugangsnetzgerät eingerichtet ist.

4. Verfahren nach Anspruch 3, wobei das Verfahren ferner Folgendes umfasst:
Auffordern, durch das Zugangsnetzgerät, des Netzelements des privaten Netzes über ein Benutzerebenennetzelement des privaten Netzes, den Sicherheitstunnel einzurichten.

5. Verfahren nach Anspruch 4, wobei das Auffordern des Netzelements des privaten Netzes über ein Benutzerebenennetzelement des privaten Netzes, den Sicherheitstunnel einzurichten, Folgendes umfasst:
Erlangen von Adressinformationen des Netzelements des privaten Netzes; und
Auffordern, basierend auf den Adressinformationen des Netzelements des privaten Netzes, des Benutzerebenennetzelements des privaten Netzes, den Sicherheitstunnel einzurichten.

6. Verfahren nach Anspruch 4, wobei das Auffordern des Netzelements des privaten Netzes über ein Benutzerebenennetzelement des privaten Netzes, den Sicherheitstunnel einzurichten, Folgendes umfasst:
Senden einer Aufforderungsnachricht an das Benutzerebenennetzelement des privaten Netzes, wobei die Aufforderungsnachricht dazu verwendet wird, aufzufordern, den Sicherheitstunnel zu dem Netzelement des privaten Netzes einzurichten; und
Empfangen einer Antwortnachricht, die durch das Benutzerebenennetzelement des privaten Netzes gesendet wird, wobei die Antwortnachricht Erledigung der Einrichtung des Sicherheitstunnels angibt; und
das Erlangen eines ersten Sicherheitsparameters von einem Netzelement eines privaten Netzes Folgendes umfasst:
Empfangen des ersten Sicherheitsparameters, der durch das Netzelement des privaten Netzes gesendet wird, über das Benutzerebenennetzelement des privaten Netzes.

7. Verfahren nach Anspruch 2, wobei das Verfahren ferner Folgendes umfasst:
Auffordern, durch das Zugangsnetzgerät, des Netzelements des privaten Netzes über das Netzelement des öffentlichen Netzes, den Sicherheitstunnel einzurichten.

8. Verfahren nach Anspruch 7, wobei das Auffordern des Netzelements des privaten Netzes über das Netzelement des öffentliches Netzes, den Sicherheitstunnel einzurichten, Folgendes umfasst:
Senden einer Aufforderungsnachricht an das Netzelement des öffentlichen Netzes, wobei die Aufforderungsnachricht dazu verwendet wird, aufzufordern, den Sicherheitstunnel zu dem Netzelement des privaten Netzes einzurichten; und
Empfangen einer Antwortnachricht, die durch das Netzelement des öffentliches Netzes gesendet wird, wobei die Antwortnachricht Erledigung der Einrichtung des Sicherheitstunnels angibt; und
das Erlangen eines ersten Sicherheitsparameters von einem Netzelement eines privaten Netzes Folgendes umfasst:
Empfangen des ersten Sicherheitsparameters, der durch das Netzelement des privaten Netzes gesendet wird, über das Netzelement des öffentlichen Netzes.

9. Kommunikationssystem, umfassend ein Netzelement eines privaten Netzes und ein Netzelement eines öffentlichen Netzes, wobei
das Netzelement des privaten Netzes zu Folgendem konfiguriert ist: Erlangen eines Stammschlüssels des privaten Netzes eines Endgeräts, Erzeugen eines ersten Sicherheitsparameters des Endgeräts basierend auf dem Stammschlüssel des privaten Netzes und Senden des ersten Sicherheitsparameters an ein Zugangsnetzgerät, wobei der erste Sicherheitsparameter dazu verwendet wird, einen Luftschnittstellenbenutzerebenenschlüssel des Endgeräts abzuleiten; und
das Netzelement des öffentlichen Netzes zu Folgendem konfiguriert ist: Erlangen eines Stammschlüssels des öffentlichen Netzes des Endgeräts, Erzeugen eines zweiten Sicherheitsparameters des Endgeräts basierend auf dem Stammschlüssel des öffentlichen Netzes und Senden des zweiten Sicherheitsparameters an das Zugangsnetzgerät, wobei der zweite Sicherheitsparameter dazu verwendet wird, einen Luftschnittstellensteuerebenenschlüssel des Endgeräts abzuleiten.

10. System nach Anspruch 9, wobei das Netzelement des privaten Netzes ein Sitzungsverwaltungsnetzelement des privaten Netzes oder ein Authentifizierungsnetzelement des privaten Netzes umfasst.

11. System nach Anspruch 9, wobei das System ferner das Zugangsnetzgerät umfasst, das dazu konfiguriert ist, das Verfahren nach einem der Ansprüche 1 bis 8 durchzuführen.

12. Kommunikationsvorrichtung (1600), umfassend ein Modul, das dazu konfiguriert ist, das Verfahren nach einem der Ansprüche 1 bis 8 durchzuführen.

13. Verfahren zum Erlangen von Sicherheitsparametern, umfassend:
Erlangen, durch ein Netzelement eines privaten Netzes, eines Stammschlüssels des privaten Netzes eines Endgeräts; Erzeugen, durch das Netzelement des privaten Netzes, eines ersten Sicherheitsparameters des Endgeräts basierend auf dem Stammschlüssel des privaten Netzes; und Senden, durch das Netzelement des privaten Netzes, des ersten Sicherheitsparameters an ein Zugangsnetzgerät, wobei der erste Sicherheitsparameter dazu verwendet wird, einen Luftschnittstellenbenutzerebenenschlüssel des Endgeräts abzuleiten; und
Erlangen, durch ein Netzelement eines öffentlichen Netzes, eines Stammschlüssels des öffentlichen Netzes des Endgeräts; Erzeugen, durch das Netzelement des öffentlichen Netzes, eines zweiten Sicherheitsparameters des Endgeräts basierend auf dem Stammschlüssel des öffentlichen Netzes; und Senden, durch das Netzelement des öffentlichen Netzes, des zweiten Sicherheitsparameters an das Zugangsnetzgerät, wobei der zweite Sicherheitsparameter dazu verwendet wird, einen Luftschnittstellensteuerebenenschlüssel des Endgeräts abzuleiten.

14. Verfahren nach Anspruch 13, ferner umfassend:
Erlangen, durch das Zugangsnetzgerät, des ersten Sicherheitsparameters;
Erlangen, durch das Zugangsnetzgerät, des zweiten Sicherheitsparameters; und
Ableiten, durch das Zugangsnetzgerät, des Luftschnittstellenbenutzerebenenschlüssels basierend auf dem ersten Sicherheitsparameter und Ableiten, durch das Zugangsnetzgerät, des Luftschnittstellensteuerebenenschlüssels basierend auf dem zweiten Sicherheitsparameter.

15. Computerlesbares Speichermedium, wobei das computerlesbare Speichermedium Computeranweisungen speichert, und, wenn die Computeranweisungen ausgeführt werden, Durchführen des Verfahrens nach einem der Ansprüche 1 bis 8 oder Ansprüche 13 bis 14 ermöglicht wird.

## Revendications

1. Procédé d'obtention de paramètre de sécurité, comprenant :
l'obtention, au moyen d'un dispositif de réseau d'accès, d'un premier paramètre de sécurité à partir d'un élément de réseau d'un réseau privé, dans lequel le premier paramètre de sécurité est utilisé pour dériver une clé de plan utilisateur d'interface radio d'un dispositif terminal ;
l'obtention, au moyen du dispositif de réseau d'accès, d'un second paramètre de sécurité à partir d'un élément de réseau d'un réseau public, dans lequel le second paramètre de sécurité est utilisé pour dériver une clé de plan de contrôle d'interface radio du dispositif terminal ; et
la dérivation, au moyen du dispositif de réseau d'accès, de la clé de plan utilisateur d'interface radio sur la base du premier paramètre de sécurité, et la dérivation de la clé de plan de contrôle d'interface radio sur la base du second paramètre de sécurité.

2. Procédé selon la revendication 1, dans lequel le premier paramètre de sécurité est chiffré à l'aide d'une clé de paramètre de sécurité ; et
la dérivation de la clé de plan utilisateur d'interface radio sur la base du premier paramètre de sécurité comprend :
le déchiffrage du premier paramètre de sécurité à l'aide de la clé de paramètre de sécurité, et la dérivation de la clé de plan utilisateur d'interface radio à l'aide d'un premier paramètre de sécurité déchiffré.

3. Procédé selon la revendication 1, dans lequel l'obtention d'un premier paramètre de sécurité à partir d'un élément de réseau d'un réseau privé comprend :
la réception du premier paramètre de sécurité à partir de l'élément de réseau du réseau privé par le biais d'un tunnel de sécurité établi entre l'élément de réseau du réseau privé et le dispositif de réseau d'accès.

4. Procédé selon la revendication 3, dans lequel le procédé comprend également :
la demande, au moyen du dispositif de réseau d'accès, à l'élément de réseau du réseau privé par le biais d'un élément de réseau de plan utilisateur du réseau privé d'établir le tunnel de sécurité.

5. Procédé selon la revendication 4, dans lequel la demande à l'élément de réseau du réseau privé par le biais d'un élément de réseau de plan utilisateur du réseau privé d'établir le tunnel de sécurité comprend :
l'obtention d'informations d'adresse de l'élément de réseau du réseau privé ; et
la demande, sur la base des informations d'adresse de l'élément réseau du réseau privé, à l'élément de réseau de plan utilisateur du réseau privé d'établir le tunnel de sécurité.

6. Procédé selon la revendication 4, dans lequel la demande à l'élément de réseau du réseau privé par le biais d'un élément de réseau de plan utilisateur du réseau privé d'établir le tunnel de sécurité comprend :
l'envoi d'un message de demande à l'élément de réseau de plan utilisateur du réseau privé, dans lequel le message de demande est utilisé pour demander d'établir le tunnel de sécurité vers l'élément de réseau du réseau privé ; et
la réception d'un message de réponse envoyé par l'élément de réseau de plan utilisateur du réseau privé, dans lequel le message de réponse indique l'achèvement de l'établissement du tunnel de sécurité ; et
l'obtention d'un premier paramètre de sécurité à partir d'un élément de réseau d'un réseau privé comprend :
la réception du premier paramètre de sécurité qui est envoyé par l'élément de réseau du réseau privé par le biais de l'élément de réseau de plan utilisateur du réseau privé.

7. Procédé selon la revendication 2, dans lequel le procédé comprend également :
la demande, au moyen du dispositif de réseau d'accès, à l'élément de réseau du réseau privé par le biais de l'élément de réseau du réseau public d'établir le tunnel de sécurité.

8. Procédé selon la revendication 7, dans lequel la demande à l'élément de réseau du réseau privé par le biais de l'élément de réseau du réseau public d'établir le tunnel de sécurité comprend :
l'envoi d'un message de demande à l'élément de réseau du réseau public, dans lequel le message de demande est utilisé pour demander d'établir le tunnel de sécurité vers l'élément de réseau du réseau privé ; et
la réception d'un message de réponse envoyé par l'élément de réseau du réseau public, dans lequel le message de réponse indique l'achèvement de l'établissement du tunnel de sécurité ; et
l'obtention d'un premier paramètre de sécurité à partir d'un élément de réseau d'un réseau privé comprend :
la réception du premier paramètre de sécurité qui est envoyé par l'élément de réseau du réseau privé par le biais de l'élément de réseau du réseau public.

9. Système de communication, comprenant un élément de réseau d'un réseau privé et un élément de réseau d'un réseau public, dans lequel
l'élément de réseau du réseau privé est configuré pour : obtenir une clé racine du réseau privé d'un dispositif terminal, générer un premier paramètre de sécurité du dispositif terminal sur la base de la clé racine du réseau privé, et envoyer le premier paramètre de sécurité à un dispositif de réseau d'accès, dans lequel le premier paramètre de sécurité est utilisé pour dériver une clé de plan utilisateur d'interface radio du dispositif terminal ; et
l'élément de réseau du réseau public est configuré pour : obtenir une clé racine du réseau public du dispositif terminal, générer un second paramètre de sécurité du dispositif terminal sur la base de la clé racine du réseau public, et envoyer le second paramètre de sécurité au dispositif de réseau d'accès, dans lequel le second paramètre de sécurité est utilisé pour dériver une clé de plan de contrôle d'interface radio du dispositif terminal.

10. Système selon la revendication 9, dans lequel l'élément de réseau du réseau privé comprend un élément de réseau de gestion de session du réseau privé ou un élément de réseau d'authentification du réseau privé.

11. Système selon la revendication 9, dans lequel le système comprend également le dispositif de réseau d'accès, configuré pour réaliser le procédé selon l'une quelconque des revendications 1 à 8.

12. Appareil de communication (1600), comprenant un module configuré pour réaliser le procédé selon l'une quelconque des revendications 1 à 8.

13. Procédé d'obtention de paramètre de sécurité, comprenant :
l'obtention, au moyen d'un élément de réseau d'un réseau privé, d'une clé racine du réseau privé d'un dispositif terminal ; la génération, au moyen de l'élément de réseau du réseau privé, d'un premier paramètre de sécurité du dispositif terminal sur la base de la clé racine du réseau privé ; et l'envoi, au moyen de l'élément de réseau du réseau privé, du premier paramètre de sécurité à un dispositif de réseau d'accès, dans lequel le premier paramètre de sécurité est utilisé pour dériver une clé de plan utilisateur d'interface radio du dispositif terminal ; et
l'obtention, au moyen d'un élément de réseau d'un réseau public, d'une clé racine du réseau public du dispositif terminal ; la génération, au moyen de l'élément de réseau du réseau public, d'un second paramètre de sécurité du dispositif terminal sur la base de la clé racine du réseau public ; et l'envoi, au moyen de l'élément de réseau du réseau public, du second paramètre de sécurité au dispositif de réseau d'accès, dans lequel le second paramètre de sécurité est utilisé pour dériver une clé de plan de contrôle d'interface radio du dispositif terminal.

14. Procédé selon la revendication 13, le procédé comprenant également :
l'obtention, au moyen du dispositif de réseau d'accès, du premier paramètre de sécurité ;
l'obtention, au moyen du dispositif de réseau d'accès, du second paramètre de sécurité ; et
la dérivation, au moyen du dispositif de réseau d'accès, de la clé de plan utilisateur d'interface radio sur la base du premier paramètre de sécurité, et la dérivation, au moyen du dispositif de réseau d'accès, de la clé de plan de contrôle d'interface radio sur la base du second paramètre de sécurité.

15. Support de stockage lisible par ordinateur, dans lequel le support de stockage lisible par ordinateur stocke des instructions informatiques, et lorsque les instructions informatiques sont exécutées, le procédé selon l'une quelconque des revendications 1 à 8, ou les revendications 13 à 14 est activé pour être réalisé.
